# EUROPEAN PATENT APPLICATION

(11) **EP 4 398 123 A1**
(43) Date of publication of application: **10.07.2024**
(21) Application number: 23795265.0
(22) Date of filing: 23.04.2023
(51) Int. Cl.: G06F 16/2458

(54) **CONTROL METHOD AND DEVICE OF DATA PROCESSING DEVICE**

(30) Priority: 26.04.2022 CN 202210447052
(71) Applicant: Huawei Technologies Co., Ltd., Shenzhen, Guangdong 518129 (CN); Tsinghua University, Beijing 100084 (CN)
(72) Inventor: DAI, Guohao, Beijing 100084 (CN); ZHU, Zhenhua, Beijing 100084 (CN); WANG, Yu, Beijing 100084 (CN); XIAO, Shihai, Shenzhen, Guangdong 518129 (CN); FU, Tianyu, Beijing 100084 (CN); ZHANG, Xuecang, Shenzhen, Guangdong 518129 (CN)
(74) Representative: Körber, Martin Hans
(86) International application number: PCT/CN2023/090020
(87) International publication number: WO 2023/207832

(57) **Abstract**

This application discloses a data processing apparatus controlling method and apparatus, to reduce processing time. The method includes: obtaining two target data groups, where the two target data groups are 1^{st} data groups in two data sets, there are a plurality of first data groups in a first data set, key values of any data group in the data set are less than key values in a data group following the any data group; and when a largest key value in a first target data group is less than or equal to a largest key value in a second target data group, using a next first data group of the first target data group as another first target data group. Therefore, an operation amount can be reduced, and operation efficiency can be improved.

## Description

This application claims priority to Chinese Patent Application No. 202210447052.8, filed with the China National Intellectual Property Administration on April 26, 2022 and entitled "DATA PROCESSING APPARATUS CONTROLLING METHOD AND APPARATUS", which is incorporated herein by reference in its entirety.

### TECHNICAL FIELD

This application relates to the data processing field, and more specifically, to a data processing apparatus controlling method and apparatus.

### BACKGROUND

A graph mining algorithm is a typical graph processing algorithm and data mining algorithm, and is used to search for a specific subgraph pattern and collect statistics on occurrence frequency of the subgraph pattern in a complete graph data structure. The graph mining algorithm is widely used. Common application cases include community network analysis in social media, protein analysis in bioinformatics, and drug discovery in the computational chemistry field.

A neighbor set of a vertex may indicate whether a relationship exists between the vertex and another vertex in a graph. The neighbor set of the vertex includes a plurality of numbers, and a value of each number is a sequence number of a vertex having a relationship with the vertex. In a graph mining process, a data processing apparatus may compare neighbor sets of two vertices in the graph, and determine an equal sequence number. The equal sequence number is a sequence number of a vertex having a relationship with both the two vertices in the graph.

A processing capability of the data processing apparatus is limited. Generally, the data processing apparatus may compare two columns of indices whose quantities of included numbers do not exceed a preset value. When a quantity of numbers in a column of indices in the two columns of indices exceeds the preset value, the numbers in the column of indices need to be grouped to obtain a plurality of arrays. Then, the data processing apparatus may separately compare the plurality of arrays with the other column of indices in the two columns of indices.

The plurality of arrays are separately compared with the other column of indices in the two columns of indices. Consequently, an operation amount is large, and processing time needed is long.

### SUMMARY

This application provides a data processing apparatus controlling method and apparatus, to reduce an operation amount and data processing time.

According to a first aspect, a data processing apparatus controlling method is provided. The method includes: obtaining a first target data group and a second target data group, where the first target data group is a 1^{st} data group in a plurality of first data groups in a first data set, the second target data group is a 1^{st} data group in at least one second data group in a second data set, each data group in each of the first data set and the second data set includes at least one piece of data, each piece of data includes a key value, the data groups in each data set are arranged according to a first sequence or a second sequence, and when the data groups in each data set are arranged according to the first sequence, key values in any data group in each data set are less than key values in a data group following the any data group, or when the data groups in each data set are arranged according to the second sequence, key values in any data group in each data set are greater than key values in a data group following the any data group; and performing a plurality of iterations. Each iteration includes: inputting the first target data group and the second target data group to a data processing apparatus, where the data processing apparatus is configured to determine an equal key value in the first target data group and second target data; and when the data groups in each data set are arranged according to the first sequence and a first key value is less than or equal to a second key value, obtaining a first data group following the first target data group in the first data set as another first target data group, where the first key value is a largest key value in the first target data group, the second key value is a largest key value in the second target data group; or when the data groups in each data set are arranged according to the second sequence and a third key value is greater than or equal to a fourth key value, obtaining a first data group following the first target data group in the first data set as another first target data group, where the third key value is a smallest key value in the first target data group, and the fourth key value is a smallest key value in the second target data group.

For two data sets, data groups in each data set are arranged according to a sequence of key values. When the data processing apparatus performs data processing, if there are a plurality of first data groups in a first data set, through iteration, first data groups whose key values exceed a key value range of a second target data group may not be input to the data processing apparatus. In other words, the first data groups are no longer compared with the second target data group, and a quantity of first data groups compared with the second target data group is reduced, thereby reducing an operation amount.

When key values in the plurality of first data groups are arranged in ascending order, the key value range of the second target data group may be less than or equal to a largest key value in the second target data group. In other words, when a largest value in key values in a first target data group is greater than or equal to the largest key value in the second target data group, a next first data group may no longer be used as another first target data group for comparison with the second target data group.

When key values in the plurality of first data groups are arranged in descending order, the key value range of the second target data group may be greater than or equal to a smallest key value in the second target data group. In other words, when a smallest value in key values in a first target data group is less than or equal to the largest key value in the second target data group, a next first data group may no longer be used as another first target data group for comparison with the second target data group.

With reference to the first aspect, in some possible implementations, there are a plurality of second data groups. When the data groups in each data set are arranged according to the first sequence and the first key value is greater than or equal to the second key value, a second data group following the second target data group in the second data set is obtained as another second target data group. When the data groups in each data set are arranged according to the second sequence and the third key value is less than or equal to the fourth key value, a second data group following the second target data group in the second data set is obtained as another second target data group.

In this way, a data group in another data set compared with a specific data group in a specific data set includes key values in a range that is greater than or equal to a smallest value in key values in the specific array group and less than or equal to a largest value in key values in the specific data group. In addition, a possibility of comparing the specific array group with a data group including only key values outside the range in the another data set is reduced. Therefore, operation efficiency is improved and an operation amount is reduced.

With reference to the first aspect, in some implementations, the data processing apparatus includes a processing matrix. The processing matrix includes v×v processing elements, and v is a positive integer. A quantity of pieces of data in each of the first target data group and the second target data group is less than or equal to v. An i^{th} piece of first data in the first target data group is input in a second direction to a j^{th} processing element in v processing elements at a first edge in a j^{th} input cycle of the iterations. A p^{th} piece of second data in the second target data is input in a first direction to a q^{th} processing element in v processing elements at a second edge in a q^{th} input cycle of the iterations. The first edge is adjacent to the second edge. Different data in each target data group is input to different processing elements. The first direction is a direction from the second edge to the inside of the processing matrix and perpendicular to the second edge. The second direction is a direction from the first edge to the inside of the processing matrix and perpendicular to the first edge. i, j, p, and q are all positive integers. Each processing element in the processing matrix is configured to: determine whether a key value in first data input to the processing element is equal to a key value in second data input to the processing element in a same input cycle. When v is greater than 1, each processing element in the processing matrix is further configured to: in a next input cycle after the first data and the second data are received, transmit the first data to a next processing element in the first direction, and transmit the second data to a next processing element in the second direction.

Processing the first target data group and the second target data group based on the processing matrix can improve processing efficiency.

With reference to the first aspect, in some possible implementations, key values in different data in each data set are different. Each processing element in the processing matrix is configured to: when the key value in the first data is not equal to the key value in the second data, transmit the first data to the next processing element in the first direction, and transmit the second data to the next processing element in the second direction.

When key values in different data in the data sets are different, and when the key value in the first data is equal to the key value in the second data, the equal key value is no longer equal to a key value in other data. Therefore, the processing element may transmit the first data to the next processing element in the first direction, and transmit the second data to the next processing element in the second direction only when the key value in the first data is not equal to the key value in the second data. Therefore, data transmission can be reduced, and an operation amount can be reduced.

With reference to the first aspect, in some possible implementations, the data processing apparatus further includes a filter matrix, the filter matrix includes v filter units, and the v filter units separately follow a last processing element in the second direction in each of v rows of the processing matrix in the first direction. Each processing element in the processing matrix is further configured to: when the key value in the first data is equal to the key value in the second data, transmit a processing result of the processing element to a next unit in the second direction in the next input cycle after the first data and the second data are received, where the unit is a processing element or a filter unit, and the processing result includes the equal key value; or transmit the processing result to a next unit in the second direction in a next input cycle after the processing result is received. The method further includes: when the first key value is greater than or equal to the second key value, controlling the v filter units in the first direction to sequentially output processing results corresponding to the second target data group based on input cycles.

Processing results corresponding to key values in a second data group may be uniformly output after the second data group is input to the data processing apparatus for the last time, thereby improving flexibility of outputting the processing results.

With reference to the first aspect, in some possible implementations, the data processing apparatus further includes a compaction triangle matrix. The compaction triangle matrix includes v rows of compaction units in the first direction, and quantities of compaction units increase row by row in the first direction. Each of the plurality of compaction units is configured to: receive a processing result output by a filter unit preceding the compaction unit in the second direction, or receive a processing result output by a compaction unit in a previous row in the first direction; and transmit the processing result to a compaction unit in a next row in the first direction in a next input cycle after the processing result is received.

The compaction triangle matrix is disposed in the data processing apparatus, so that processing results corresponding to a specific second data group may be output in a same input cycle, thereby improving flexibility of outputting the processing results.

With reference to the first aspect, in some possible implementations, different key values correspond to different vertex sets in a graph. The first data indicates whether a first target vertex in the graph has a relationship with at least one vertex in a vertex set corresponding to a key value in the first data. The second data indicates whether a second target vertex in the graph has a relationship with at least one vertex in a vertex set corresponding to a key value in the second data. Each processing matrix is further configured to output a processing result when the key value in the first data is equal to the key value in the second data. The processing result indicates a query vertex in the graph. Relationships between the query vertex and the two target vertices meet a preset condition.

The query vertex in the graph having connections with the two target vertices that meet the preset condition can be determined, so that a subgraph with a structure of a specific subgraph pattern in the graph can be identified to implement graph mining.

With reference to the first aspect, in some possible implementations, the first data further includes a first relationship value group of the first target vertex corresponding to the key value, and the second data further includes a second relationship value group of the second target vertex corresponding to the key value. Each processing element in the processing matrix is further configured to: when the key value in the first data is equal to the key value in the second data, perform a preset operation on each bit in the first relationship value group and the second relationship value group. A same bit in the first relationship value group and in the second relationship value group corresponding to the equal key value corresponds to a same vertex in the vertex sets corresponding to the equal key value. A result of the preset operation on each bit indicates whether relationships between the vertex corresponding to the bit and the two target vertices meet the preset condition.

The key value in the first data is equal to the key value in the second data. In other words, the key value in the first data and the key value in the second data indicate a same vertex set. Therefore, the query vertex may be determined based on a result of a bitwise preset operation on the first relationship value group and the second relationship value group.

The <key, value> pairs of the vertices in the graph are used to determine an equal key value in <key, value> pairs of two target vertices in the graph, and determine, based on relationship value groups of the two vertices corresponding to the equal key value, a query vertex whose relationships with the two target vertices meet a preset condition. In addition to reducing an amount of data indicating the graph, processing time needed for determining the query vertex can be reduced.

With reference to the first aspect, in some possible implementations, when the data groups in each data set are arranged according to the first sequence, key values in each first data group are arranged in ascending order. Alternatively, when the data groups in each data set are arranged according to the second sequence, key values in each first data group are arranged in descending order.

Key values in the first data set are arranged in ascending or descending order, so that at least one piece of data may be obtained from the first data set as a first target data group, and first target data groups obtained for a plurality of times are first data groups. In this way, the first data groups are more flexibly divided.

According to a second aspect, a data processing apparatus controlling apparatus is provided, including an obtaining module and a processing module. The obtaining module is configured to obtain a first target data group and a second target data group. The first target data group is a 1^{st} data group in a plurality of first data groups in a first data set. The second target data group is a 1^{st} data group in at least one second data group in a second data set. Each data group in each of the first data set and the second data set includes at least one piece of data. The data groups in each data set are arranged according to a first sequence or a second sequence. When the data groups in each data set are arranged according to the first sequence, key values in any data group in each data set are less than key values in a data group following the any data group. Alternatively, when the data groups in each data set are arranged according to the second sequence, key values in any data group in each data set are greater than key values in a data group following the any data group. The processing module is configured to perform a plurality of iterations. Each iteration includes: inputting the first target data group and the second target data group to the data processing apparatus. The data processing apparatus is configured to determine an equal key value in the first target data group and second target data. Each iteration further includes: when the data groups in each data set are arranged according to the first sequence and a first key value is less than or equal to a second key value, obtaining a first data group following the first target data group in the first data set as another first target data group. The first key value is a largest key value in the first target data group. The second key value is a largest key value in the second target data group. Each iteration further includes: when the data groups in each data set are arranged according to the second sequence and a third key value is greater than or equal to a fourth key value, obtaining a first data group following the first target data group in the first data set as another first target data group. The third key value is a smallest key value in the first target data group. The fourth key value is a smallest key value in the second target data group.

With reference to the second aspect, in some possible implementations, there are a plurality of second data groups. When the data groups in each data set are arranged according to the first sequence, and the first key value is greater than or equal to the second key value, a second data group following the second target data group in the second data set is obtained as another second target data group. When the data groups in each data set are arranged according to the second sequence and the third key value is less than or equal to the fourth key value, a second data group following the second target data group in the second data set is obtained as another second target data group.

With reference to the second aspect, in some implementations, the data processing apparatus includes a processing matrix. The processing matrix includes v×v processing elements, and v is a positive integer. A quantity of pieces of data in each of the first target data group and the second target data group is less than or equal to v. An i^{th} piece of first data in the first target data group is input in a second direction to a j^{th} processing element in v processing elements at a first edge in a j^{th} input cycle of the iterations. A p^{th} piece of second data in the second target data is input in a first direction to a q^{th} processing element in v processing elements at a second edge in a q^{th} input cycle of the iterations. The first edge is adjacent to the second edge. Different data in each target data group is input to different processing elements. The first direction is a direction from the second edge to the inside of the processing matrix and perpendicular to the second edge. The second direction is a direction from the first edge to the inside of the processing matrix and perpendicular to the first edge. Each processing element in the processing matrix is configured to: determine whether a key value in first data input to the processing element is equal to a key value in second data input to the processing element in a same input cycle. When v is greater than 1, each processing element in the processing matrix is further configured to: in a next input cycle after the first data and the second data are received, transmit the first data to a next processing element in the first direction, and transmit the second data to a next processing element in the second direction.

With reference to the second aspect, in some possible implementations, key values in different data in each data set are different. Each processing element in the processing matrix is configured to: when the key value in the first data is not equal to the key value in the second data, transmit the first data to the next processing element in the first direction, and transmit the second data to the next processing element in the second direction.

With reference to the second aspect, in some possible implementations, the data processing apparatus further includes a filter matrix. The filter matrix includes v filter units. The v filter units separately follow a last processing element in the second direction in each of v rows of the processing matrix in the first direction. Each processing element in the processing matrix is further configured to: when the key value in the first data is equal to the key value in the second data, transmit a processing result of the processing element to a next unit in the second direction in the next input cycle after the first data and the second data are received, where the unit is a processing element or a filter unit, and the processing result includes the equal key value; or transmit the processing result to a next unit in the second direction in a next input cycle after the processing result is received. The processing module is further configured to: when the first key value is greater than or equal to the second key value, control the v filter units in the first direction to sequentially output processing results corresponding to the second target data group based on input cycles.

With reference to the second aspect, in some possible implementations, the data processing apparatus further includes a compaction triangle matrix. The compaction triangle matrix includes v rows of compaction units in the first direction, and quantities of compaction units increase row by row in the first direction. Each of the plurality of compaction units is configured to: receive a processing result output by a filter unit preceding the compaction unit in the second direction, or receive a processing result output by a compaction unit in a previous row in the first direction. Each of the plurality of compaction units is further configured to transmit the processing result to a compaction unit in a next row in the first direction in a next input cycle after the processing result is received.

With reference to the second aspect, in some possible implementations, different key values correspond to different vertex sets in a graph. The first data indicates whether a first target vertex in the graph has a relationship with at least one vertex in a vertex set corresponding to a key value in the first data. The second data indicates whether a second target vertex in the graph has a relationship with at least one vertex in a vertex set corresponding to a key value in the second data. Each processing matrix is further configured to output a processing result when the key value in the first data is equal to the key value in the second data. The processing result indicates a query vertex in the graph. Relationships between the query vertex and the two target vertices meet a preset condition.

With reference to the second aspect, in some possible implementations, the first data further includes a first relationship value group of the first target vertex corresponding to the key value. The second data further includes a second relationship value group of the second target vertex corresponding to the key value. Each processing element in the processing matrix is further configured to: when the key value in the first data is equal to the key value in the second data, perform a preset operation on each bit in the first relationship value group and the second relationship value group. A same bit in the first relationship value group and in the second relationship value group corresponding to the equal key value corresponds to a same vertex in the vertex sets corresponding to the equal key value. A result of the preset operation on each bit indicates whether relationships between the vertex corresponding to the bit and the two target vertices meet the preset condition.

With reference to the second aspect, in some possible implementations, when the data groups in each data set are arranged according to the first sequence, key values in each first data group are arranged in ascending order. Alternatively, when the data groups in each data set are arranged according to the second sequence, key values in each first data group are arranged in descending order.

According to a third aspect, a data processing apparatus controlling apparatus is provided, including a memory and at least one processor. The memory is configured to store a program. When the program is executed in the at least one processor, the controlling apparatus is configured to perform the method according to any one of the first aspect.

According to a fourth aspect, a data processing method is provided, including: obtaining at least one <key, value> pair of a first target vertex and at least one <key, value> pair of a second target vertex in two target vertices in a graph, where each <key, value> pair of the target vertex includes a key value of the target vertex and a relationship value group of the target vertex corresponding to the key value, different key values correspond to different vertex sets in the graph, the relationship value group of the target vertex corresponding to the key value of the target vertex indicates whether a relationship exists between the target vertex and vertices in a vertex set corresponding to the key value, and a vertex having a relationship with the target vertex exists in the vertex set corresponding to the key value in each <key, value> pair of the target vertex; determining an equal key value in the at least one key value of the first target vertex and the at least one key value of the second target vertex; and determining a query vertex in the graph based on the relationship value group of the first target vertex and the relationship value group of the second target vertex that correspond to the equal key value, where relationships between the query vertex and the two target vertices meet a preset condition.

The vertex having a relationship with the target vertex exists in the vertex set corresponding to the key value in each <key, value> pair of the target vertex. In other words, for each target vertex, a vertex having a relationship with the target vertex exists in a vertex set corresponding to a key value in each <key, value> pair.

The <key, value> pairs of the vertices in the graph are used to determine an equal key value in <key, value> pairs of two target vertices in the graph, and determine, based on relationship value groups of the two vertices corresponding to the equal key value, a query vertex whose relationships with the two target vertices meet the preset condition. In addition to reducing an amount of data indicating the graph, processing time needed for determining the query vertex can be reduced.

With reference to the fourth aspect, in some possible implementations, the obtaining at least one <key, value> pair of each of two target vertices in a graph includes: obtaining data of the graph, where the data of the graph includes a row offset vector, a key value vector, and a relationship value vector; and determining the at least one <key, value> pair of each of the two target vertices based on the graph data. The key value vector includes at least one key value of each vertex in a plurality of vertices in the graph. The row offset vector indicates a location of at least one key value of each vertex in the key value vector. The relationship value vector includes relationship value groups of vertices corresponding to key values of each vertex in a plurality of vertices. A ranking of at least one key value of each vertex in the key value vector is the same as a ranking of a relationship value group of a vertex corresponding to the key value of each vertex in the relationship value vector.

The <key, value> pair of each vertex in the graph may be determined based on the graph data. Storing graphs in a graph data format can reduce storage space.

With reference to the fourth aspect, in some possible implementations, different key values correspond to an equal quantity of vertices in the vertex sets.

Quantities of vertices in the vertex sets corresponding to different key values are equal. Therefore, a manner of determining a <key, value> pair of the target vertex based on the graph data is more convenient.

With reference to the fourth aspect, in some possible implementations, the determining a query vertex in the graph based on the relationship value group of the first target vertex and the relationship value group of the second target vertex that correspond to the equal key value includes: performing a preset operation on each bit of the relationship value group of the first target vertex and each bit of the relationship value group of the second target vertex that correspond to the equal key value. A same bit in relationship value groups that correspond to key values and that are of different vertices corresponds to a same vertex in vertex sets corresponding to the key values. A result of the preset operation on each bit indicates whether relationships between the vertex corresponding to the bit and the two target vertices meet the preset condition.

The preset operation is performed on each bit in relationship value groups that are of the two target vertices and that correspond to the equal key value of the two target vertices. The operation may be performed in parallel, to reduce operation time.

With reference to the fourth aspect, in some possible implementations, the determining an equal key value in the at least one key value of the first target vertex and the at least one key value of the second target vertex includes: sequentially inputting the at least one <key, value> pair of the first target vertex in a second direction to a plurality of processing elements at a first edge in a processing matrix based on input cycles, and sequentially inputting the at least one <key, value> pair of the second target vertex in a first direction to a plurality of processing elements at a second edge in the processing matrix based on the input cycles, to determine the equal key value. The processing matrix includes v×v processing elements, and v is an integer greater than 1. The at least one <key, value> pair of the first target vertex and the at least one <key, value> pair of the second target vertex start to be input to the processing matrix in a same input cycle. The first edge is adjacent to the second edge. The first direction is a direction away from the second edge. The second direction is a direction away from the first edge. Each processing element is configured to determine whether a key value of the first target vertex input to the processing element is equal to a key value of the second target vertex input to the processing element. The determining a query vertex in the graph based on the relationship value group of the first target vertex and the relationship value group of the second target vertex that correspond to the equal key value includes: processing the relationship value group of the first target vertex and the relationship value group of the second target vertex that correspond to the same key value based on the processing matrix, to determine the query vertex. Each of the plurality of processing elements is configured to: when the key value of the first target vertex is equal to the key value of the second target vertex, determine the query vertex in the graph based on the relationship value group of the first target vertex input to the processing element and the relationship value group of the second target vertex input to the processing element, where relationships between the query vertex and the two target vertices meet the preset condition. Each of the plurality of processing elements is further configured to: transmit the <key, value> pair of the first target vertex to a next processing element in the first direction, and transmit the <key, value> pair of the second target vertex to a next processing element in the second direction based on the input cycles.

The processing matrix may be understood as a systolic array (systolic array). A <key, value> pair of each target vertex "flows" rhythmically between processing elements in the processing matrix in a "pipelined" method. Data passing through is processed by the processing elements in parallel to improve a processing speed and reduce processing time.

With reference to the fourth aspect, in some possible implementations, each of the plurality of processing elements is specifically configured to: when the key value of the first target vertex is not equal to the key value of the second target vertex, transmit the <key, value> pair of the first target vertex to the next processing element in the first direction, and transmit the <key, value> pair of the second target vertex to the next processing element in the second direction.

Key values in <key, value> pairs of a target vertex are different. When the key value of the first target vertex is not equal to the key value of the second target vertex, the processing element transmits the key value of the first target vertex and the key value of the second target vertex. When the key value of the first target vertex is equal to the key value of the second target vertex, the <key, value> pairs are no longer transmitted. Therefore, the equal key value may not be compared with another key value, thereby reducing an operation amount.

With reference to the fourth aspect, in some possible implementations, a quantity of <key, value> pairs of the first target vertex is greater than v. The method further includes: dividing the at least one <key, value> pair of the first target vertex into a plurality of first <key, value> pair groups according to a sequence of key values in the <key, value> pairs, and dividing the at least one <key, value> pair of the second target vertex into at least one second <key, value> pair group according to a sequence of key values in the <key, value> pairs, where a quantity of <key, value> pairs in each of the plurality of first <key, value> pair groups and the at least one second <key, value> pair group is less than or equal to v, a <key, value> pair group having smallest key values in the plurality of first <key, value> pair groups is a third <key, value> pair group, and a <key, value> pair group having smallest key values in the plurality of second <key, value> pair groups is a fourth <key, value> pair group; performing a plurality of iterations, until a largest key value in the third <key, value> pair group is greater than a largest key value in the fourth <key, value> pair group. The iteration includes: sequentially inputting at least one <key, value> pair in the third <key, value> pair group to a plurality of processing elements at the first edge in the plurality of processing elements based on input cycles, and sequentially inputting at least one <key, value> pair in the fourth <key, value> pair group to a plurality of processing elements at the second edge in the plurality of processing elements based on input cycles; and when the largest key value in the third <key, value> pair group is less than the largest key value in the fourth <key, value> pair group, using a next first <key, value> pair group of the third <key, value> pair group in the plurality of first <key, value> pair groups arranged in ascending order of key values as another third <key, value> pair group. The sequentially inputting the at least one <key, value> pair of the first target vertex in a second direction to a plurality of processing elements at a first edge in a processing matrix based on the input cycles, and sequentially inputting the at least one <key, value> pair of the second target vertex in a first direction to a plurality of processing elements at a second edge in the processing matrix based on the input cycles includes: before the performing a plurality of iterations and after each iteration, sequentially inputting a plurality of <key, value> pairs in the third <key, value> pair group to the plurality of processing elements at the first edge in the processing matrix based on the input cycles, and sequentially inputting a plurality of <key, value> pairs in the fourth <key, value> pair group to the plurality of processing elements at the second edge in the processing matrix in the plurality of processing elements based on the input cycles.

A plurality of first <key, value> pair groups are compared with a second <key, value> pair group in ascending order of key values. When a largest key value in a first <key, value> pair group is less than a largest key value in the second <key, value> pair group, a next first <key, value> pair group is input to the processing matrix for comparison with the second <key, value> pair group. When a largest key value in a first <key, value> pair group is greater than or equal to a largest key value in the second <key, value> pair group, comparison with the second <key, value> pair group may be no longer performed, to reduce the operation amount.

Particularly, when there are a plurality of first <key, value> pair groups and a plurality of second <key, value> pair groups, compared with a manner of comparing each first <key, value> pair group with each second <key, value> pair group, the method provided in this application can significantly reduce the operation amount and the operation time.

According to a fifth aspect, a data processing apparatus is provided, including: an obtaining module and a processing module. The obtaining module is configured to obtain at least one <key, value> pair of a first target vertex and at least one <key, value> pair of a second target vertex in two target vertices in a graph, where each <key, value> pair of the target vertex includes a key value of the target vertex and a relationship value group of the target vertex corresponding to the key value, different key values correspond to different vertex sets in the graph, the relationship value group of the target vertex corresponding to the key value of the target vertex indicates whether a relationship exists between the target vertex and vertices in a vertex set corresponding to the key value, and a vertex having a relationship with the target vertex exists in the vertex set corresponding to the key value in each <key, value> pair of the target vertex. The processing module is configured to: determine an equal key value in the at least one key value of the first target vertex and the at least one key value of the second target vertex. The processing module is further configured to: determine a query vertex in the graph based on the relationship value group of the first target vertex and the relationship value group of the second target vertex that correspond to the equal key value, where relationships between the query vertex and the two target vertices meet a preset condition.

With reference to the fifth aspect, in some possible implementations, the obtaining module is specifically configured to: obtain data of the graph, where the data of the graph includes a row offset vector, a key value vector, and a relationship value vector; and determine the at least one <key, value> pair of each of the two target vertices based on the graph data. The key value vector includes at least one key value of each vertex in a plurality of vertices in the graph. The row offset vector indicates a location of at least one key value of each vertex in the key value vector. The relationship value vector includes relationship value groups of vertices corresponding to key values of each vertex in the plurality of vertices. A ranking of at least one key value of each vertex in the key value vector is the same as a ranking of a relationship value group of a vertex corresponding to the key value of each vertex in the relationship value vector.

With reference to the fifth aspect, in some possible implementations, different key values correspond to an equal quantity of vertices in the vertex sets.

With reference to the fifth aspect, in some possible implementations, the processing module is specifically configured to perform a preset operation on each bit of the relationship value group of the first target vertex and each bit of the relationship value group of the second target vertex that correspond to the equal key value. A same bit in relationship value groups that correspond to key values and that are of different vertices corresponds to a same vertex in vertex sets corresponding to the key values. A result of the preset operation on each bit indicates whether relationships between the vertex corresponding to the bit and the two target vertices meet the preset condition.

With reference to the fifth aspect, in some possible implementations, the processing module includes: a controller and a processing matrix. The processing matrix includes v×v processing elements, and v is an integer greater than 1. The controller is configured to: sequentially input the at least one <key, value> pair of the first target vertex in the two target vertices in the graph in a second direction to a plurality of processing elements at a first edge in the processing matrix based on input cycles, and sequentially input the at least one <key, value> pair of the second target vertex in the two target vertices in a first direction to a plurality of processing elements at a second edge in the processing matrix based on the input cycles. The at least one <key, value> pair of the first target vertex and the at least one <key, value> pair of the second target vertex start to be input to the processing matrix in a same input cycle. The first edge is adjacent to the second edge. The first direction is a direction away from the second edge. The second direction is a direction away from the first edge. Each <key, value> pair of the target vertex include a key value of the target vertex and a relationship value group of the target vertex corresponding to the key value. Different key values correspond to different vertex sets in the graph. The relationship value group of the target vertex corresponding to the key value of the target vertex indicates whether the target vertex has a relationship with vertices in a vertex set corresponding to the key value. A vertex having a relationship with the target vertex exists in the vertex set corresponding to the key value in each <key, value> pair of the target vertex. Each of the plurality of processing elements is configured to: determine whether a key value of the first target vertex input to the processing element is equal to a key value of the second target vertex input to the processing element; and when the key value of the first target vertex is equal to the key value of the second target vertex, determine the query vertex in the graph based on the relationship value group of the first target vertex input to the processing element and the relationship value group of the second target vertex input to the processing element, where relationships between the query vertex and the two target vertices meet the preset condition; or transmit the <key, value> pair of the first target vertex to a next processing element in the first direction, and transmit the <key, value> pair of the second target vertex to a next processing element in the second direction based on the input cycles.

With reference to the fifth aspect, in some possible implementations, each of the plurality of processing elements is specifically configured to: when the key value of the first target vertex is not equal to the key value of the second target vertex, transmit the <key, value> pair of the first target vertex to the next processing element in the first direction, and transmit the <key, value> pair of the second target vertex to the next processing element in the second direction.

With reference to the fifth aspect, in some possible implementations, a quantity of <key, value> pairs of the first target vertex is greater than v, and the controller is further configured to:
divide the at least one <key, value> pair of the first target vertex into a plurality of first <key, value> pair groups according to a sequence of key values in the <key, value> pairs, and divide the at least one <key, value> pair of the second target vertex into at least one second <key, value> pair group according to a sequence of key values in the <key, value> pairs, where a quantity of <key, value> pairs in each of the plurality of first <key, value> pair groups and the at least one second <key, value> pair group is less than or equal to v, a <key, value> pair group having smallest key values in the plurality of first <key, value> pair groups is a third <key, value> pair group, and a <key, value> pair group having smallest key values in the plurality of second <key, value> pair groups is a fourth <key, value> pair group; perform a plurality of iterations, until a largest key value in the third <key, value> pair group is greater than a largest key value in the fourth <key, value> pair group. The iteration includes: sequentially inputting at least one <key, value> pair in the third <key, value> pair group to a plurality of processing elements at the first edge in the plurality of processing elements based on the input cycles, and sequentially inputting at least one <key, value> pair in the fourth <key, value> pair group to a plurality of processing elements at the second edge in the plurality of processing elements based on the input cycles; and when the largest key value in the third <key, value> pair group is less than the largest key value in the fourth <key, value> pair group, using a next first <key, value> pair group of the third <key, value> pair group in the plurality of first <key, value> pair groups arranged in ascending order of key values as another third <key, value> pair group. The controller is specifically configured to: before the performing a plurality of iterations and after each iteration, sequentially inputting a plurality of <key, value> pairs in the third <key, value> pair group to the plurality of processing elements at the first edge in the processing matrix based on the input cycles, and sequentially inputting a plurality of <key, value> pairs in the fourth <key, value> pair group to the plurality of processing elements at the second edge in the processing matrix in the plurality of processing elements based on the input cycles.

According to a sixth aspect, a data processing apparatus is provided, including: a controller and a processing matrix. The processing matrix includes v×v processing elements, and v is an integer greater than 1. The controller is configured to: sequentially input at least one <key, value> pair of a first target vertex in two target vertices in a graph in a second direction to a plurality of processing elements at a first edge in the processing matrix in the plurality of processing elements based on the input cycles, and sequentially input at least one <key, value> pair of a second target vertex in the two target vertices in a first direction to a plurality of processing elements at a second edge in the processing matrix in the plurality of processing elements based on the input cycles. The at least one <key, value> pair of the first target vertex and the at least one <key, value> pair of the second target vertex start to be input to the processing matrix in a same input cycle. The first edge is adjacent to the second edge. The first direction is a direction away from the second edge. The second direction is a direction away from the first edge. Each <key, value> pair of the target vertex include a key value of the target vertex and a relationship value group of the target vertex corresponding to the key value. Different key values correspond to different vertex sets in the graph. The relationship value group of the target vertex corresponding to the key value of the target vertex indicates whether the target vertex has a relationship with vertices in a vertex set corresponding to the key value. A vertex having a relationship with the target vertex exists in the vertex set corresponding to the key value in each <key, value> pair of the target vertex. Each of the plurality of processing elements is configured to: determine whether a key value of the first target vertex input to the processing element is equal to a key value of the second target vertex input to the processing element; and when the key value of the first target vertex is equal to the key value of the second target vertex, determine the query vertex in the graph based on the relationship value group of the first target vertex input to the processing element and the relationship value group of the second target vertex input to the processing element, where relationships between the query vertex and the two target vertices meet the preset condition; or transmit the <key, value> pair of the first target vertex to a next processing element in the first direction, and transmit the <key, value> pair of the second target vertex to a next processing element in the second direction based on the input cycles. The first direction is perpendicular to the first edge, and the second direction is perpendicular to the second edge.

With reference to the sixth aspect, in some possible implementations, each of the plurality of processing elements is specifically configured to: when the key value of the first target vertex is not equal to the key value of the second target vertex, transmit the <key, value> pair of the first target vertex to the next processing element in the first direction, and transmit the <key, value> pair of the second target vertex to the next processing element in the second direction.

Key values in <key, value> pairs of a target vertex are different. When the key value of the first target vertex is not equal to the key value of the second target vertex, the processing element transmits the key value of the first target vertex and the key value of the second target vertex. When the key value of the first target vertex is equal to the key value of the second target vertex, the <key, value> pairs are no longer transmitted. Therefore, the equal key value may not be compared with another key value, thereby reducing an operation amount.

With reference to the sixth aspect, in some possible implementations, the controller is further configured to: determine the at least one <key, value> pair of the first target vertex and the at least one <key, value> pair of the second target vertex based on graph data. The graph data includes a row offset vector, a key value vector, and a relationship value vector. The key value vector includes at least one key value of each vertex in a plurality of vertices in the graph. The row offset vector indicates a location of at least one key value of each vertex in the key value vector. The relationship value vector includes relationship value groups of vertices corresponding to key values of each vertex in the plurality of vertices. A ranking of at least one key value of each vertex in the key value vector is the same as a ranking of a relationship value group of a vertex corresponding to the key value of each vertex in the relationship value vector.

The <key, value> pair of each vertex in the graph may be determined based on the graph data. Storing graphs in a graph data format can reduce storage space.

For example, the controller is further configured to determine at least one <key, value> pair of the first target vertex and at least one <key, value> pair of the second target vertex based on the stored graph data.

With reference to the sixth aspect, in some possible implementations, different key values correspond to an equal quantity of vertices in the vertex sets.

Quantities of vertices in the vertex sets corresponding to different key values are equal. Therefore, a manner of determining a <key, value> pair of the target vertex based on the graph data is more convenient.

With reference to the sixth aspect, in some possible implementations, each of the plurality of processing elements is configured to: when the key value of the first target vertex is equal to the key value of the second target vertex, perform a preset operation on each bit of the relationship value group of the first target vertex and each bit of the relationship value group of the second target vertex that correspond to the equal key value. A same bit in relationship value groups that correspond to key values and that are of different vertices corresponds to a same vertex in vertex sets corresponding to the key values. A result of the preset operation on each bit indicates whether relationships between the vertex corresponding to the bit and the two target vertices meet the preset condition.

The preset operation is performed on each bit in relationship value groups that are of the two target vertices and that correspond to the equal key value of the two target vertices. The operation may be performed in parallel, to reduce operation time.

With reference to the sixth aspect, in some possible implementations, a quantity of <key, value> pairs of the first target vertex is greater than v, and the controller is specifically configured to: divide the at least one <key, value> pair of the first target vertex into a plurality of first <key, value> pair groups according to a sequence of key values in the <key, value> pairs, and divide the at least one <key, value> pair of the second target vertex into at least one second <key, value> pair group according to a sequence of key values in the <key, value> pairs, where a quantity of <key, value> pairs in each of the plurality of first <key, value> pair groups and the at least one second <key, value> pair group is less than or equal to v, a <key, value> pair group having smallest key values in the plurality of first <key, value> pair groups is a third <key, value> pair group, and a <key, value> pair group having smallest key values in the plurality of second <key, value> pair groups is a fourth <key, value> pair group; perform an iteration, until a largest key value in the third <key, value> pair group is greater than a largest key value in the fourth <key, value> pair group. The iteration includes: sequentially inputting a plurality of <key, value> pairs in the third <key, value> pair group to a plurality of processing elements at the first edge in the plurality of processing elements based on the input cycles, and sequentially inputting a plurality of <key, value> pairs in the fourth <key, value> pair group to a plurality of processing elements at the second edge in the plurality of processing elements based on the input cycles; and when the largest key value in the third <key, value> pair group is less than the largest key value in the fourth <key, value> pair group, using a next first <key, value> pair group of the third <key, value> pair group in the plurality of first <key, value> pair groups arranged in ascending order of key values as another third <key, value> pair group. The controller is specifically configured to: before the performing a plurality of iterations and after each iteration, sequentially inputting the plurality of <key, value> pairs in the third <key, value> pair group to the plurality of processing elements at the first edge in the processing matrix based on the input cycles, and sequentially inputting the plurality of <key, value> pairs in the fourth <key, value> pair group to the plurality of processing elements at the second edge in the processing matrix in the plurality of processing elements based on the input cycles.

When the quantity of <key, value> pairs of the first target vertex is greater than v, the at least one <key, value> pair of the first target vertex is divided into the plurality of first <key, value> pair groups in ascending order of key values, and is separately compared with the at least one second <key, value> pair group of the first target vertex.

A plurality of first <key, value> pair groups are compared with a second <key, value> pair group in ascending order of key values. When a largest key value in a first <key, value> pair group is less than a largest key value in the second <key, value> pair group, a next first <key, value> pair group is input to the processing matrix for comparison with the second <key, value> pair group. When a largest key value in a first <key, value> pair group is greater than or equal to a largest key value in the second <key, value> pair group, comparison with the second <key, value> pair group may be no longer performed, to reduce the operation amount.

Particularly, when there are a plurality of first <key, value> pair groups and a plurality of second <key, value> pair groups, compared with comparing each first <key, value> pair group with each second <key, value> pair group, the method provided in this application can significantly reduce the operation amount and the operation time.

According to a seventh aspect, a data processing apparatus is provided, including a memory and at least one processor. The memory is configured to store a program. When the program is executed in the at least one processor, the processor is configured to perform the method according to any one of the first aspect or the implementations of the first aspect.

According to an eighth aspect, a computer-readable medium is provided. The computer-readable medium stores program code to be executed by a device, and the program code is used to perform the method according to any one of the first aspect or the fourth aspect or the implementations of the first aspect or the fourth aspect.

According to a ninth aspect, a computer program product including instructions is provided. When the computer program product runs on a computer, the computer is enabled to perform the method according to any one of the first aspect or the fourth aspect or the implementations of the first aspect or the fourth aspect.

According to a tenth aspect, a chip is provided. The chip includes a processor and a data interface, and the processor reads, through the data interface, instructions stored in a memory, to perform the method according to any one of the first aspect or the fourth aspect or the implementations of the first aspect or the fourth aspect.

According to an eleventh aspect, a data processing system is provided, including the data processing apparatus controlling apparatus according to the first aspect and a data sorting apparatus.

Optionally, in an implementation, the chip may further include a memory, and the memory stores instructions. A processor is configured to execute the instructions stored in the memory. When the instructions are executed, the processor is configured to perform the method according to any one of the first aspect or the fourth aspect or the implementations of the first aspect or the fourth aspect.

The chip may be specifically a field-programmable gate array (field-programmable gate array, FPGA) or an application-specific integrated circuit (application-specific integrated circuit, ASIC).

It should be understood that, in this application, the method in the first aspect may specifically indicates the method according to any one of the first aspect or the implementations of the first aspect.

### BRIEF DESCRIPTION OF DRAWINGS

FIG. 1 is a schematic diagram of a structure of a graph mining algorithm;
FIG. 2 is a schematic diagram of a data format;
FIG. 3 is a schematic diagram of set merging based on queuing;
FIG. 4 is a schematic diagram of a structure of a data processing method according to an embodiment of this application;
FIG. 5 is a schematic flowchart of a method for generating graph data according to an embodiment of this application;
FIG. 6 is a schematic flowchart of another data processing method according to an embodiment of this application;
FIG. 7 is a schematic diagram of a structure of a data processing apparatus according to an embodiment of this application;
FIG. 8 is a schematic flowchart of still another data processing method according to an embodiment of this application;
FIG. 9 is a schematic diagram of a structure of a processing element according to an embodiment of this application;
FIG. 10 is a schematic diagram of a <key, value> pair set according to an embodiment of this application;
FIG. 11 is a schematic diagram of a structure of a filter unit according to an embodiment of this application;
FIG. 12 is a schematic diagram of a structure of a compaction triangle according to an embodiment of this application;
FIG. 13 is a schematic diagram of a structure of a compaction unit according to an embodiment of this application;
FIG. 14 is a schematic diagram of processing time of a data processing apparatus according to an embodiment of this application;
FIG. 15 is a schematic diagram of a structure of a data processing apparatus according to an embodiment of this application;
FIG. 16 is a schematic diagram of a structure of a data processing system according to an embodiment of this application;
FIG. 17 is a schematic diagram of a structure of another data processing system according to an embodiment of this application;
FIG. 18 is a schematic diagram of performance comparison between data processing systems according to an embodiment of this application;
FIG. 19 is a schematic flowchart of a data processing apparatus controlling method according to an embodiment of this application;
FIG. 20 is a schematic diagram of a structure of a data processing apparatus controlling apparatus according to an embodiment of this application;
FIG. 21 is a schematic diagram of a structure of a data processing apparatus controlling apparatus according to an embodiment of this application; and
FIG. 22 is a schematic diagram of a structure of a data processing system according to an embodiment of this application.

### DESCRIPTION OF EMBODIMENTS

The following describes technical solutions of this application with reference to accompanying drawings.

A graph mining algorithm is a typical graph processing algorithm and data mining algorithm, and is used to search for a specific subgraph pattern and collect statistics on occurrence frequency of the subgraph pattern in a complete graph data structure. The graph mining algorithm is widely used. Common application cases include community network analysis in social media, protein analysis in bioinformatics, and drug discovery in the computational chemistry field.

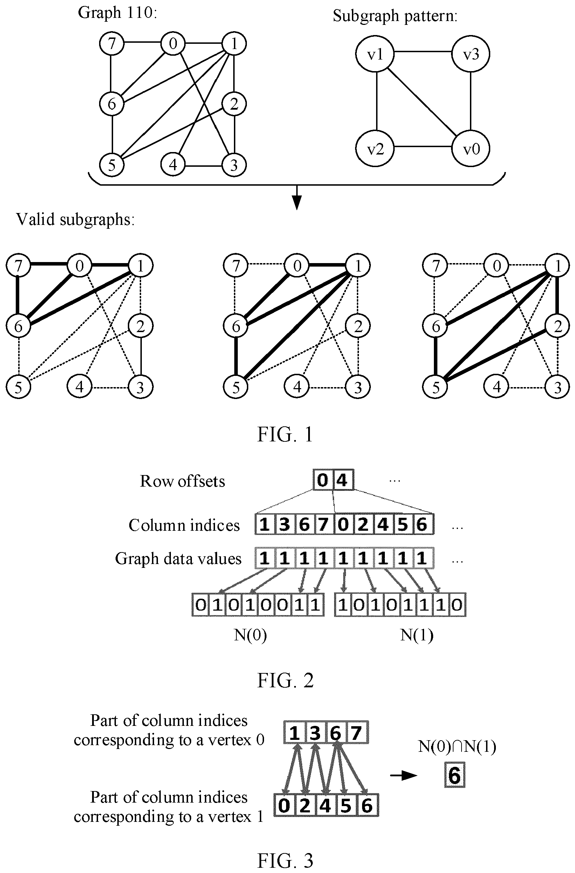

FIG. 1 is a schematic diagram of a structure of a graph mining algorithm.

Vertices (that is, a vertex 1 to a vertex N) in a graph 110 are sequentially used as a vertex v0 in a subgraph pattern.

The graph may also be referred to as a spectral graph or a graph data structure, and indicates whether a relationship exists between nodes. That a relationship exists between two nodes may also be understood as that two nodes have a relationship.

The graph includes interconnected vertices and edges. A vertex in the graph may also be referred to as a node, and may indicate an entity. An edge between two vertices in the graph may indicate that a relationship exists between the two vertices.

The entity indicates something that can be distinguished and exists independently, for example, a person, a city, a plant, a commodity, a device, or an atom.

When a relationship exists between two vertices, the two vertices are connected over an "edge". When no relationship exists between two vertices, no "edge" exists between the two vertices. Two vertices connected over an "edge" are neighbors to each other.

A relationship network may be obtained by connecting different types of information over the graph. This provides a capability of analyzing a problem from a perspective of a "relationship" over the graph.

In the subgraph pattern, a vertex v1 is a neighbor of the vertex v0. When it is determined that a vertex u0 in the graph 110 is the vertex v0, neighbors of the vertex u0 are sequentially used as the vertex v1.

In the subgraph pattern, a vertex v2 is a neighbor shared by the vertex v0 and the vertex v1. When it is determined that a vertex u1 in the graph 110 is the vertex v1, vertices in neighbors shared by the vertex u0 and the vertex u1 are sequentially used as the vertex v2. The neighbors shared by the vertex u0 and the vertex u1 belong to an intersection of neighbors of the vertex u0 and neighbors of the vertex u1 in the graph 110.

In the subgraph pattern, a vertex v3 is a neighbor shared by the vertex v0 and the vertex v1, but not a neighbor of the vertex v2. When it is determined that a vertex u2 in the graph 110 is the vertex v2, vertices that are in the neighbors shared by the vertex u0 and the vertex u1 and that does not belong to neighbors of the vertex u2 are sequentially used as the vertex v3.

The vertices that are in the neighbors shared by the vertex u0 and the vertex u1 and that does not belong to the neighbors of the vertex u2 are sequentially used as a vertex u3. Therefore, a valid subgraph may be determined.

A core of a depth-first search algorithm is a series of nested for loops and set operations.

```
for u0∈A
            for u1∈N(u0)
               for u2∈N(u0)∩N(u1)
                 for u3∈N(u0∩N(u1)-N(u2)
```

The set A is a set of vertices in the graph 110, N(ui) indicates a set of neighbors of a vertex ui, i∈{0, 1, 2, 3}, and "∩" indicates an intersection. N(u0)∩N(u1)-N(u2) indicates an intersection of a set of the neighbors of the vertex u0 and a set of the neighbors of the vertex u1 minus vertices in a set of the neighbors of the vertex u2.

Each time an innermost for loop is performed according to the graph mining algorithm and the vertex u3 exists, a valid subgraph exists.

The graph 110 shown in FIG. 1 is processed according to the graph mining algorithm to obtain three valid subgraphs.

The graph 110 shown in FIG. 1 may be stored in a compressed sparse row (compressed sparse row, CSR) format.

For the graph, a vector corresponding to each vertex may indicate whether the vertex is connected to other vertices. A quantity of bits of the vector corresponding to each vertex may be equal to a quantity of vertices in the graph. The graph 110 shown in FIG. 1 includes eight vertices. The vector corresponding to each vertex in the graph 110 may include 8 bits (bits), and each bit indicates whether the vertex is connected to another vertex. A same bit in different vectors indicates whether vertices corresponding to the different vectors are connected to a same vertex. In other words, the same bit in the different vectors corresponds to the same vertex.

For example, in a vector corresponding to a vertex in the graph 110 shown in FIG. 1, an i^{th} bit indicates whether the vertex is connected to a vertex i, iE[0, 7], and i is an integer. There is no "edge" between a vertex 0 and the vertex 0, that is, there is no connection, and a 0^{th} bit in a vector corresponding to the vertex 0 is 0. There is an "edge" between the vertex 0 and a vertex 1, that is, there is a connection, and a 1^{st} bit in the vector corresponding to the vertex 0 is "1". There is no connection between the vertex 0 and a vertex 2, and a 2^{nd} bit in the vector corresponding to the vertex 0 is "0". Therefore, it may be determined that the vector N(0) corresponding to the vertex 0 is "01010011", and a vector N(1) corresponding to the vertex 1 is "10101110".

An adjacency matrix may include vectors corresponding to vertices in the graph. The vectors corresponding to the vertices in the graph may be indicated by a row in the adjacency matrix. A sequence of vertices corresponding to each row in the adjacency matrix may be the same as a sequence of vertices corresponding to bits in each vector.

The adjacency matrix may be stored in a CSR format, that is, data in a CSR format may indicate a graph.

FIG. 2 is a schematic diagram of data in a CSR format.

The data in the CSR format is obtained by encoding the entire data. The data in the CSR format includes three parts: row offsets, column indices, and graph data values. An i^{th} number in the row offsets indicates a start location of a 1^{st} non-zero element in an i^{th} row of a matrix. The column indices indicate column coordinates of columns in which non-zero elements in the matrix are located. The graph data values indicate specific values of the non-zero elements.

In the adjacency matrix of the graph 110 shown in FIG. 1, a 0^{th} row is N(0)=01010011, and a 1^{st} row is N(1)=10101110. Column coordinates of columns in which non-zero elements are located in the 0^{th} row are respectively 1, 3, 6, and 7, and there are 4 bits in total. Column coordinates of columns in which non-zero elements are located in the 1^{st} row are respectively 0, 2, 4, 5, and 6, and there are 5 bits in total. Therefore, the adjacency matrix can be indicated in the CSR format as the row offsets (row) "0, 4, ...", the column indices " 1, 3, 6, 7, 0, 2, 4, 5, 6, ...", and the graph data values "1, 1, 1, 1, 1, 1, 1, 1, 1, ...".

In a graph in a CSR format, a part of column indices corresponding to each vertex can be understood as a neighbor set of the vertex. An intersection of neighbor sets of two vertices is determined, and then a query vertex having a relationship with the vertices corresponding to the two sets can be determined.

When a set merging operation is performed on neighbor sets of vertices in the adjacency matrix stored in the CSR format, column indices of corresponding parts first need to be obtained based on sequence numbers of the vertices and corresponding row offsets, and then the parts of the two groups of column indices are compared to obtain a same sequence number through screening. A vertex indicated by the same sequence number is the query vertex.

For example, it is determined based on row offsets "0, 4, 9, ..." that sequence numbers for locations of non-zero values in a vector corresponding to a vertex 0 (that is, a neighbor set corresponding to the vertex 0) are respectively a 0^{th} number to a 3^{rd} number in the column indices, and sequence numbers for locations of non-zero values in a vector corresponding to a vertex 1 (that is, a neighbor set corresponding to the vertex 1) are respectively a 4^{th} number to an 8^{th} number in the column indices. Then, as shown in FIG. 3, the 0^{th} number to the 3^{rd} number in the column indices are compared with the 4^{th} number to the 8^{th} number in the column indices, that is, the neighbor set of the vertex 0 is compared with the neighbor set of the vertex 1, and an intersection of the neighbor set of the vertex 0 and the neighbor set of the vertex 1 is determined.

A data processing apparatus may be configured to compare column index parts of the two vertices. However, a processing capability of the data processing apparatus is limited. The data processing apparatus may compare two neighbor sets, and a quantity of sequence numbers included in each of the two neighbor sets does not exceed a preset value.

When a quantity of numbers in a column of indices in two columns of indices exceeds the preset value, the numbers in the column of indices need to be grouped to obtain a plurality of arrays. Subsequently, the data processing apparatus may separately compare the plurality of arrays with the other column of indices in the two columns of indices. As a result, an operation amount needed is large, and processing time needed is long.

To resolve the foregoing problems, an embodiment of this application provides a data processing method.

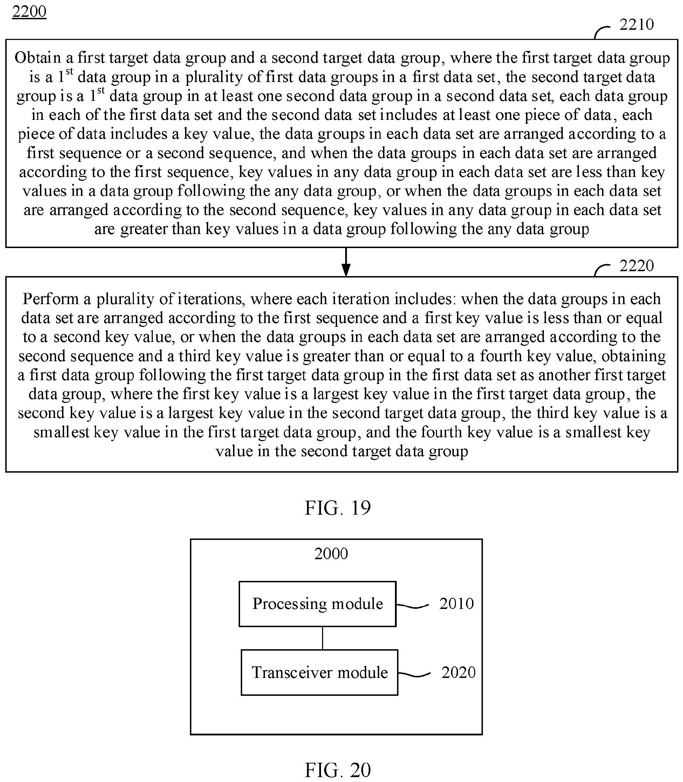

FIG. 19 is a schematic flowchart of a data processing method based on a data processing apparatus according to this embodiment of this application.

The data processing apparatus includes a processing matrix. The processing matrix includes v×v processing elements, and v is a positive integer.

The method 2200 includes S2210 and S2220.

S2210: Obtain a first target data group and a second target data group, where the first target data group is a 1^{st} data group in a plurality of first data groups in a first data set, the second target data group is a 1^{st} data group in at least one second data group in a second data set, each data group in each of the first data set and the second data set includes at least one piece of data, each piece of data includes a key value, the data groups in each data set are arranged according to a first sequence or a second sequence, and when the data groups in each data set are arranged according to the first sequence, key values in any data group in each data set are less than key values in a data group following the any data group, or when the data groups in each data set are arranged according to the second sequence, key values in any data group in each data set are greater than key values in a data group following the any data group.

The first data set and the second data set may be stored in a memory. The first data set includes the plurality of first data groups, and the second data set includes a plurality of second data groups.

The obtaining a first target data group and a second target data group may be reading the first target data group and the second target data group from the memory.

S2220: Perform a plurality of iterations.

Each iteration includes inputting the first target data group and the second target data group to the data processing apparatus. The data processing apparatus is configured to determine an equal key value in the first target data group and second target data.

Each iteration further includes, when the data groups in each data set are arranged according to the first sequence and a first key value is less than or equal to a second key value, or when the data groups in each data set are arranged according to the second sequence and a third key value is greater than or equal to a fourth key value, obtaining a first data group following the first target data group in the first data set as another first target data group. The first key value is a largest key value in the first target data group. The second key value is a largest key value in the second target data group. The third key value is a smallest key value in the first target data group. The fourth key value is a smallest key value in the second target data group.

For two data sets, data groups in each data set are arranged according to a sequence of key values. When the data processing apparatus performs data processing, if there are a plurality of first data groups in a first data set, through the iteration, first data groups whose key values exceed a key value range of a second target data group may not be input to the data processing apparatus. In other words, the first data groups are no longer compared with the second target data group. This reduces a quantity of first data groups compared with the second target data group, and reduces an operation amount.

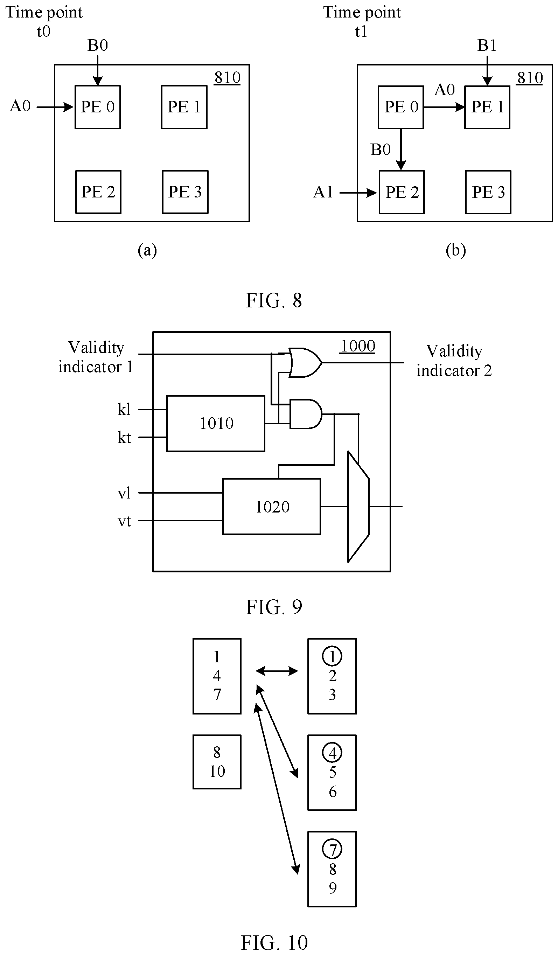

FIG. 10 shows an example in which a first sequence is the same as a second sequence. A left column is a first data set, and a right column is a second data set. The first data set includes five pieces of data whose key values are 1, 4, 7, 8, and 10, and the second data set includes nine pieces of data whose key values are 1, 2, 3, 4, 5, 6, 7, 8, and 9. When v=3, the first data set may include two first data groups. A 1^{st} first data group includes three pieces of data whose key values are 1, 4, and 7, and a 2^{nd} first data group includes two pieces of data whose key values are 8 and 10. The second data set may include three second data groups. A 1^{st} second data group includes three pieces of data whose key values are 1, 2, and 3, a 2^{nd} second data group includes three pieces of data whose key values are 4, 5, and 6, and a 3^{rd} second data group includes three pieces of data whose key values are 7, 8, and 9.

In S2210, the first data group including the key values 1, 4, and 7 and the second data group including key values 1, 2, and 3 may be obtained, and are respectively used as the first target data group and the second target data group. In S2220, because the largest key value 7 in the first target data group is greater than the largest key value 4 in the second target data group, the next first data group of the first target data group is no longer used as another first target data group for comparison with the second target data group including the key values 1, 2, and 3. Therefore, a quantity of first data groups compared with the second data group can be reduced, and an operation amount can be reduced.

In addition, in method 2200, not all first data groups and second data groups need to be obtained in advance, thereby reducing requirements for a processing capability and a storage capability of an apparatus for performing the method 2200, and improving flexibility and adaptability of the method.

If there are a plurality of second data groups in the second data set, when the data groups in each data set are arranged according to the first sequence, and the first key value is greater than or equal to the second key value, a second data group following the second target data group in the second data set is obtained as another second target data group.

If there are a plurality of second data groups in the second data set, when the data groups in each data set are arranged according to the second sequence and the third key value is less than or equal to the fourth key value, a second data group following the second target data group in the second data set is obtained as another second target data group.

FIG. 10 is still used as an example for description. In S2220, the largest key value 7 in the first target data group is greater than the largest key value 3 in the second target data group, and the next second data group of the 1^{st} second data group may be obtained and used as another second target data group. The 2^{nd} second data group includes the three pieces of data whose key values are 4, 5, and 6.

When a second iteration is performed, the largest key value 7 in the first target data group is greater than the largest key value 6 in the second target data group, the next second data group of the 2^{nd} second data group may be obtained and used as still another second target data group.

When a third iteration is performed, the largest key value 7 in the first target data group is less than the largest key value 9 in the second target data group, a next first data group of the current first target data group (that is, the 1^{st} first data group) may be obtained and used as a new first target data group.

When a first sequence is the same as a second sequence, and there are a plurality of first data groups and a plurality of second data groups, a next target data group in a data set to which a target data group including a smaller key value belongs is used as a target data group in a next iteration, and a target data group including a larger key value is used as another target data group in the next iteration. In this way, a data group in another data set compared with a specific data group in a specific data set includes key values in a range that is greater than or equal to a smallest value in key values in the specific data group and less than or equal to a largest value in key values in the specific data group. In addition, a possibility of comparing the specific data group with a data group including only key values outside the range in the another data set is reduced. Therefore, operation efficiency is improved and an operation amount is reduced.

The data processing apparatus may include a processing matrix. The processing matrix includes v×v processing elements, and v is a positive integer. A quantity of pieces of data in each of the first target data group and the second target data group is less than or equal to v.

In each iteration process, the first target data group and the second target data group may be input to the processing matrix according to an input rule. According to the input rule, a p^{th} piece of second data in the second target data group is input in a first direction to a q^{th} processing element in v processing elements at a second edge in a q^{th} input cycle of the iterations. An i^{th} piece of first data in the first target data group is input in a second direction to a j^{th} processing element in v processing elements at a first edge in a j^{th} input cycle of the iterations. The first target data group and the second data group start to be input in a same input cycle. The first edge is adjacent to the second edge. The first direction is a direction from the second edge to the inside of the processing matrix and perpendicular to the second edge. The second direction is a direction from the first edge to the inside of the processing matrix and perpendicular to the first edge.

Each processing element in the processing matrix is configured to: determine whether a key value in first data input to the processing element is equal to a key value in second data input to the processing element in a same input cycle. The first data is data belonging to the first target data group, and the second data is data belonging to the second target data group.

When v is greater than 1, each processing element in the processing matrix is further configured to: in a next input cycle after the first data and the second data are received, transmit the first data to a next processing element in the first direction, and transmit the second data to a next processing element in the second direction.

Processing the first target data group and the second target data group based on the processing matrix can improve processing efficiency.

The processing matrix may be understood as a logical matrix. Whether actual physical locations of processing elements in the processing matrix are arranged in a row-column manner is not limited in this embodiment of this application. The first direction and the second direction may be understood as logical directions in the processing matrix.

When key values in different data in each data set are different, each processing element in the processing matrix is configured to: when the key value in the first data is not equal to the key value in the second data, transmit the first data to the next processing element in the first direction, and transmit the second data to the next processing element in the second direction.

When key values in different data in the data sets are different, and when the key value in the first data is equal to the key value in the second data, the equal key value is no longer equal to a key value in other data. Therefore, the processing element may transmit the first data to the next processing element in the first direction, and transmit the second data to the next processing element in the second direction only when the key value in the first data is not equal to the key value in the second data. Therefore, data transmission can be reduced, and an operation amount can be reduced.

The data processing apparatus may further include a filter matrix. The filter matrix includes v filter units. The v filter units separately follow a last processing element in the second direction in each of v rows of the processing matrix in the first direction.

Each processing element in the processing matrix is further configured to: when the key value in the first data is equal to the key value in the second data, transmit a processing result of the processing element to a next unit in the second direction in the next input cycle after the first data and the second data are received, where the unit is a processing element or a filter unit, and the processing result includes the equal key value.

Each processing element in the processing matrix is further configured to: transmit the processing result to a next unit in the second direction in a next input cycle after the processing result is received.

The method 2200 further includes: when the first key value is greater than or equal to the second key value, controlling the v filter units in the first direction to sequentially output processing results corresponding to the second target data group based on input cycles.

Therefore, processing results corresponding to key values in a second data group may be uniformly output after the second data group is input to the data processing apparatus for the last time, thereby improving flexibility of outputting the processing results.

The data processing apparatus may further include a compaction triangle matrix. The compaction triangle matrix includes v rows of compaction units in the first direction, and quantities of compaction units increase row by row in the first direction.

The v rows of compaction units may separately follow a filter unit in the second direction.

Each of the plurality of compaction units is configured to: receive a processing result output by a filter unit preceding the compaction unit in the second direction, or receive a processing result output by a compaction unit in a previous row in the first direction.

Each of the plurality of compaction units is configured to transmit the processing result to a compaction unit in a next row in the first direction in a next input cycle after the processing result is received.

The compaction triangle matrix is disposed in the data processing apparatus, so that processing results corresponding to a specific second data group may be output in a same input cycle, thereby improving flexibility of outputting the processing results.

The method 2200 may be applied to graph mining.

Different key values correspond to different vertex sets in a graph. The first data indicates whether a first target vertex in the graph has a relationship with at least one vertex in a vertex set corresponding to a key value in the first data. The second data indicates whether a second target vertex in the graph has a relationship with at least one vertex in a vertex set corresponding to a key value in the second data.

Each processing matrix is further configured to output a processing result when the key value in the first data is equal to the key value in the second data. The processing result indicates a query vertex in the graph. Relationships between the query vertex and the two target vertices meet a preset condition.

The preset condition may be one of the following four cases: a relationship exists with both the first target vertex and the second target vertex, a relationship exists with the first target vertex but no relationship exists with the second target vertex, no relationship exists with the first target vertex but a relationship exists with the second target vertex, and no relationship exists with both the first target vertex and the second target vertex. The preset condition may be determined based on a subgraph pattern in graph mining.

In the method 2200, the query vertex in the graph having connections with the two target vertices that meet the preset condition can be determined, so that a subgraph with a structure of a specific subgraph pattern in the graph can be identified.

For two target vertices, there is at most one same key value in each piece of data. Therefore, when it is determined that a key value of a specific piece of data of the first target vertex is equal to a key value of a specific piece of data of the second target vertex, the processing element may no longer transmit the piece of data of the first target vertex and the piece of data of the second target vertex, thereby reducing an operation amount.

In other words, in a graph mining process, each processing element may be configured to: when the key value in the first data is not equal to the key value in the second data, transmit the first data to the next processing element in the first direction, and transmit the second data to the next processing element in the second direction.

It should be understood that quantities of vertices in vertex sets corresponding to different key values in data of the target vertex may be the same or different. A vertex set corresponding to each key value may include one or more vertices.

In some embodiments, the quantities of vertices in vertex sets corresponding to different key values may be 1, and each piece of data of the target vertex may include only a key value. Different key values of the target vertex may indicate different vertices having a relationship with the target vertex in the graph, or different key values of the target vertex may indicate different vertices having no relationship with the target vertex in the graph. Whether a vertex indicated by a key value of the target vertex has a relationship with the target vertex may be determined, for example, based on relationships between the query vertex that needs to be determined and two target vertices. This is not limited in this embodiment of this application.

In some other embodiments, there may be a plurality of vertices in a vertex set corresponding to each of the different key values. Each piece of data of the target vertex may include a key value and a relationship value group of the target vertex corresponding to the key value. The relationship value group of the target vertex corresponding to the key value indicates whether the target vertex has a relationship with each vertex in the vertex set corresponding to the key value.

In other words, the first data further includes a first relationship value group of the first target vertex corresponding to the key value. The second data further includes a second relationship value group of the second target vertex corresponding to the key value.

Each processing element in the processing matrix is further configured to: when the key value in the first data is equal to the key value in the second data, perform a preset operation on each bit in the first relationship value group and the second relationship value group. A same bit in the first relationship value group and in the second relationship value group corresponding to the equal key value corresponds to a same vertex in the vertex sets corresponding to the equal key value. A result of the preset operation on each bit indicates whether relationships between the vertex corresponding to the bit and the two target vertices meet the preset condition.

The key value in the first data is equal to the key value in the second data. In other words, the key value in the first data and the key value in the second data indicate a same vertex set. Therefore, the query vertex may be determined based on a result of a bitwise preset operation on the first relationship value group and the second relationship value group.

It should be understood that the processing result of the processing element may further include a result of performing a preset operation on each bit of the first relationship value group and the second relationship value group.

For example, each filter unit in the filter matrix is configured to: determine, based on the received processing result, whether the query vertex exists, and output a processing result in which the query vertex exists.

In other words, the filter matrix may filter processing results output by the processing matrix, and determine, in the processing results output by the processing matrix, the processing result in which the query vertex exists.

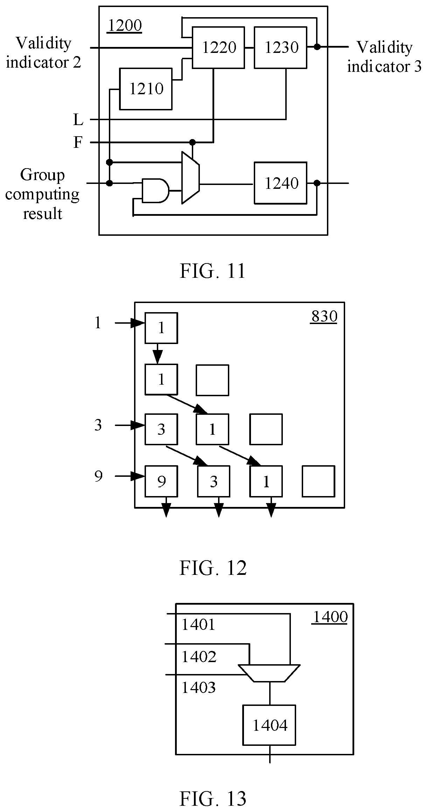

For details of the filter matrix, refer to descriptions in FIG. 10 and FIG. 11. For details of the compaction triangle matrix, refer to descriptions in FIG. 12 and FIG. 13.

When the data groups in each data set are arranged according to the first sequence, key values in each first data group are arranged in ascending order. Alternatively, when the data groups in each data set are arranged according to the second sequence, key values in each first data group are arranged in descending order.

Data in each data set may be arranged in ascending or descending order of key values. Therefore, the data groups in the data set may be stored in a format obtained after division. Alternatively, the apparatus for performing the method 2000 may divide the data set.

For example, when the data groups in each data set are arranged according to the first sequence, in S2210, at least one piece of first data and at least one piece of second data may be obtained. The at least one piece of first data is the first target data group, and the at least one piece of second data is the second target data group. In S2220, at least one piece of first data obtained each time may be used as one first target data group, and at least one piece of second data obtained each time is a second target data group. After the iterations end, at least one piece of first data that has not been obtained may be used as one or more first data groups, and at least one piece of second data that has not been obtained may be used as one or more second data groups.

When the data processing apparatus including the processing matrix performs data processing, v pieces of first data and/or v pieces of second data may be obtained each time, so that operation processing efficiency can be improved.

Data in each data set is arranged in a sequence of key values, so that data group division is more flexible.

For example, in an iteration process, at least one piece of data whose quantity does not exceed v may be obtained from the first data set as the first target data group.

Similarly, key values in each second data group are arranged in ascending order according to the second sequence.

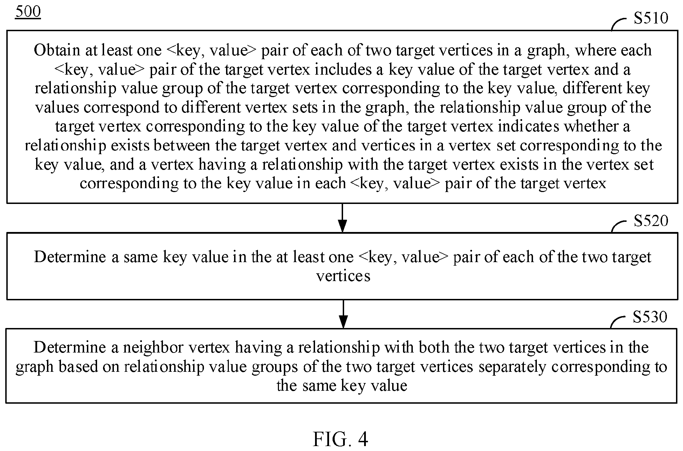

FIG. 4 is a schematic diagram of a structure of a data processing method according to an embodiment of this application. The data processing method 500 includes S510 to S530.

S510: Obtain at least one <key, value> pair of a first target vertex and at least one <key, value> pair of a second target vertex in two target vertices in a graph, where each <key, value> pair of the target vertex includes a key value of the target vertex and a relationship value group of the target vertex corresponding to the key value, different key values correspond to different vertex sets in the graph, the relationship value group of the target vertex corresponding to the key value of the target vertex indicates whether a relationship exists between the target vertex and vertices in a vertex set corresponding to the key value, and a vertex having a relationship with the target vertex exists in the vertex set corresponding to the key value in each <key, value> pair of the target vertex.

S520: Determine an equal key value in the at least one key value of the first target vertex and the at least one key value of the second target vertex.

S530: Determine a query vertex in the graph based on the relationship value group of the first target vertex and the relationship value group of the second target vertex that correspond to the equal key value, where relationships between the query vertex and the two target vertices meet a preset condition.

Generally, in the graph, each vertex has a relationship with only a few vertices in the graph. In other words, if each bit in a relationship vector of each vertex indicates whether the vertex has a relationship with vertices in the graph, where "1" indicates that a relationship exists, and "0" indicates that no relationship exists, the relationship vector of each vertex may be considered as sparse data.

The vertices in the graph are divided into a plurality of vertex sets, and each vertex set corresponds to a key value. For each vertex, a relationship value group of the vertex corresponding to each key value may indicate whether vertices in the vertex set corresponding to the key value have a relationship with the vertex. If a vertex corresponding to the vertex exists in a vertex set, a key value corresponding to the vertex set and a relationship value group of the vertex corresponding to the key value may be used as a <key, value> pair of the vertex.

Data compaction can be implemented by using <key, value> pairs of vertices in the graph to indicate the graph.

In the method 500, the <key, value> pairs of the vertices in the graph are used to determine an equal key value in <key, value> pairs of two target vertices in the graph, and determine, based on relationship value groups of the two vertices corresponding to the equal key value, a query vertex whose relationships with the two target vertices meet a preset condition. In addition to reducing an amount of data indicating the graph, processing time needed for determining the query vertex can be reduced.

In the method shown in FIG. 3, a vertex having a relationship with both the two vertices is determined in a manner of determining a same column index in column index queues of the two vertices through set merging based on queuing. Compared with the method shown in FIG. 3, in the method 500, a key value in a <key, value> pair indicates a vertex set of vertices having relationships with the target vertex. A quantity of <key, value> pairs is usually less than a quantity of column indices. Therefore, comparison of key values can reduce an operation amount and reduce operation time.

Vertex sets corresponding to different key values may include or not include a same vertex. The vertex sets corresponding to different key values do not include a same vertex, so that data compaction can be further improved, and storage space occupied for storing <key, value> pairs of vertices indicating a graph is reduced.

In S510, graph data may be obtained, and at least one <key, value> pair of each of the two target vertices is determined based on the graph data.

The <key, value> pair of each vertex in the graph may be indicated by graph data. The graph data includes a row offset vector, a key value vector, and a relationship value vector.

The key value vector includes at least one key value of each vertex in the graph.

The row offset vector indicates a location of at least one key value of each vertex in the key value vector.

For example, the row offset vector may include a plurality of pieces of offset information, and each piece of offset information indicates a start location of at least one key value of one vertex in the key value vector. A sequence of offset information of the vertices in the graph in the row offset vector may be the same as a sequence of key values of the vertices in the key value vector.

The offset information may be a sequence number. The key values of the vertices are consecutive in the key value vector. Offset information of a vertex indicates a start sequence number of at least one key value of the vertex in the key value vector.

The relationship value vector includes relationship value groups of vertices corresponding to key values of vertices in the graph. A ranking of at least one key value of each vertex in the key value vector is the same as a ranking of a relationship value group of a vertex corresponding to the key value of each vertex in the relationship value vector.

Using the graph data to indicate the graph can further improve data compaction.

Quantities of vertices in vertex sets corresponding to different key values may be equal or unequal. For example, an odd key value and an even key value may correspond to different quantities of vertices in vertex sets.

A start location of a relationship value group corresponding to each key value of a target vertex in a relationship value vector may be determined based on a quantity of vertices in a vertex set corresponding to each key value preceding at least one key value of the target vertex in a key value vector. Then, the start location is used as a start vertex. A relationship value group corresponding to each key value of the target vertex is determined based on a quantity of vertices in a vertex set corresponding to the key value of the target vertex.

When quantities of vertices in vertex sets corresponding to different key values are equal, a relationship value group corresponding to each key value of the target vertex may be determined based on a location of at least one key value of the target vertex in the key value vector and a quantity of equal vertices in the vertex set. Therefore, a manner of determining a <key, value> pair of the target vertex based on the graph data is more convenient.

In S530, a preset operation may be performed on each bit of the relationship value group of the first target vertex and each bit of the relationship value group of the second target vertex that correspond to the equal key value.

In relationship value groups of different vertices corresponding to a same key value, a same bit corresponds to a same vertex in a vertex set corresponding to the key value.

In the relationship value groups corresponding to the same key value, different bits may correspond to different vertices in the vertex set corresponding to the key value, so that a computing amount can be reduced.

In relationship value groups corresponding to the same key value, a result of a preset operation for each bit indicates whether relationships between the vertex corresponding to the bit and the two target vertices meet a preset condition.

Preset operations may be respectively performed in parallel on bits in the relationship value groups of the two target vertices corresponding to the same key value. Therefore, computing efficiency can be improved.

Further, the at least one <key, value> pair of the first target vertex and the at least one <key, value> pair of the second target vertex may be processed based on the processing matrix.

In S520, the at least one <key, value> pair of the first target vertex may be sequentially input to a plurality of processing elements at a first edge in the processing matrix, and the at least one <key, value> pair of the second target vertex is sequentially input to a plurality of processing elements at a second edge in the processing matrix, to determine the equal key value. The processing matrix includes v×v processing elements, and v is an integer greater than 1. An i^{th} <key, value> pair in the first target data group is input in a second direction to a j^{th} processing element in at least one processing element at the first edge in a j^{th} input cycle. A p^{th} <key, value> pair in the second target data is input in a first direction to a q^{th} processing element in at least one processing element at a second edge in a q^{th} input cycle. The first edge is adjacent to the second edge. The first direction is a direction from the second edge to the inside of the processing matrix and perpendicular to the second edge. The second direction is a direction from the first edge to the inside of the processing matrix and perpendicular to the first edge. Each processing element is configured to determine whether a key value of the first target vertex input to the processing element is equal to a key value of the second target vertex input to the processing element.

In S530, the processing matrix may process the relationship value group of the first target vertex and the relationship value group of the second target vertex that correspond to the equal key value, to determine the query vertex. Each of the plurality of processing elements is configured to: when the key value of the first target vertex is equal to the key value of the second target vertex, determine the query vertex in the graph based on the relationship value group of the first target vertex input to the processing element and the relationship value group of the second target vertex input to the processing element. Relationships between the query vertex and the two target vertices meet the preset condition.

Each of the plurality of processing elements is further configured to: transmit the <key, value> pair of the first target vertex to a next processing element in the first direction, and transmit the <key, value> pair of the second target vertex to a next processing element in the second direction based on input cycles.

The processing matrix may be understood as a systolic array (systolic array). A <key, value> pair of each target vertex "flows" rhythmically between processing elements in the processing matrix in a "pipelined" method. Data passing through is processed by the processing elements in parallel to improve a processing speed and reduce processing time.

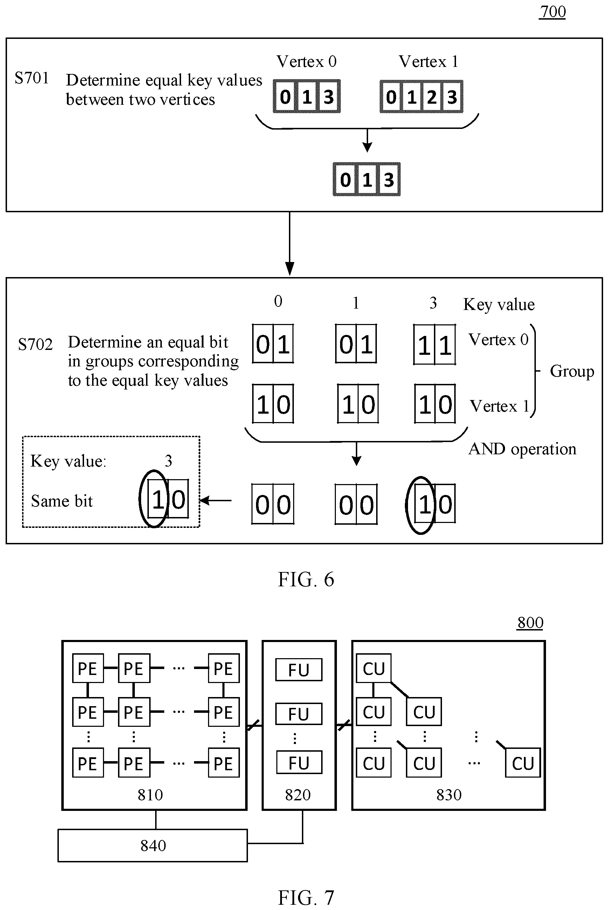

For a specific structure of the processing matrix, refer to descriptions in FIG. 7 to FIG. 15.

Each of the plurality of processing elements may be specifically configured to: when the key value of the first target vertex is not equal to the key value of the second target vertex, transmit the <key, value> pair of the first target vertex to the next processing element in the first direction, and transmit the <key, value> pair of the second target vertex to the next processing element in the second direction.

Key values in <key, value> pairs of a target vertex are different. When the key value of the first target vertex is not equal to the key value of the second target vertex, the processing element transmits the key value of the first target vertex and the key value of the second target vertex. When the key value of the first target vertex is equal to the key value of the second target vertex, the <key, value> pairs are no longer transmitted. Therefore, the equal key value may not be compared with another key value, thereby reducing an operation amount.

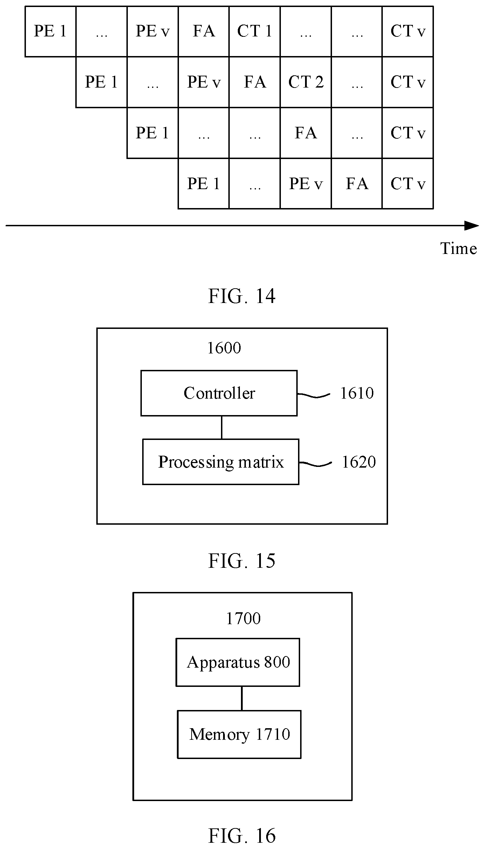

When a quantity of <key, value> pairs of the first target vertex is greater than v, the processing matrix may still process <key, value> pairs of the first target vertex and <key, value> pairs of the second target vertex. For details, refer to descriptions in FIG. 10 and FIG. 15.

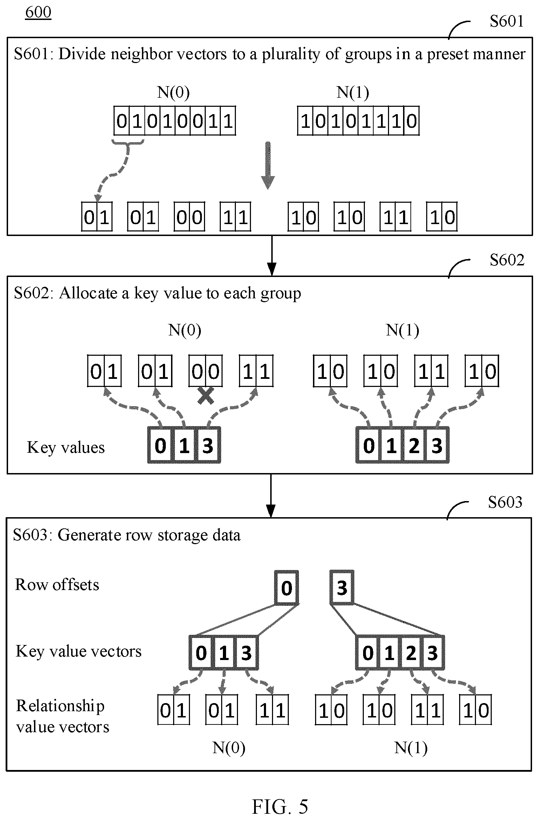

FIG. 5 is a schematic flowchart of a method for generating graph data according to an embodiment of this application. The method 600 for generating graph data includes S601 to S603.

A graph includes a plurality of interconnected vertices and edges for connecting the vertices. The graph may be indicated by neighbor vectors of the vertices in the graph. Each neighbor vector includes a same quantity of bits. An i^{th} bit in a neighbor vector of each vertex indicates whether a relationship exists between the vertex and an i^{th} vertex in the graph. In other words, the i^{th} bit in the neighbor vector corresponds to the i^{th} vertex in the graph. "0" may indicate that no relationship exists, and "1" indicates that a relationship exists.

For the graph 110, a neighbor vector corresponding to a vertex 0 is N(0)=01010011, and a neighbor vector corresponding to a vertex 1 is N(1)=10101110.

S601: Divide neighbor vectors to a plurality of groups in a preset manner.

All groups may include a same quantity of bits.

For example, the neighbor vectors may be divided into the plurality of groups based on a remainder obtained by dividing sequence numbers of bits in the neighbor vectors by a divisor, and different groups correspond to different remainders. The divisor may be a preset value.

Alternatively, each neighbor vector may be divided based on a fixed quantity of bits in an order from left to right. When a quantity of bits of a neighbor vector cannot be exactly divided by a quantity of bits of a group, "0" may be added to an end of the neighbor vector, so that quantities of bits of groups are the same.

The following describes an example in which the neighbor vectors are divided based on to a quantity of bits that is 2.

In each neighbor vector, bits corresponding to the vertex 0 and the vertex 1 form a group, bits corresponding to a vertex 2 and a vertex 3 form a group, and so on, to complete division of the neighbor vectors.

A divided neighbor vector N(0) includes four groups, which are sequentially 01, 01, 00, and 11. A divided neighbor vector N(1) includes four groups, which are sequentially 10, 10, 11, and 11.

S602: Allocate a key value (key) to each group.

A key value of a group may also be understood as an identifier of the group. Groups obtained after different neighbor vectors are divided include groups that have a same bit in the neighbor vectors and have a same key value. For example, a key value of each group may be a sequence number of the group in the plurality of groups obtained after the neighbor vectors are divided.

N(0) is divided into four groups 01, 01, 00, and 11, which respectively correspond to key values 0, 1, 2, and 3. N(1) is divided into four groups 10, 10, 11, and 11, which respectively correspond to key values 0, 1, 2, and 3.

A key value array of each vertex may include a plurality of key values of the array. Not all bits of a group corresponding to a key value in the key value array are 0. In other words, when a key value array is formed, a key value corresponding to a group whose bits are all 0 is discarded.

A key value array of the vertex 0 may include 0, 1, and 3, and a key value array of the vertex 1 may include 0, 1, 2, and 3.

In a key value array, key values may be arranged according to a preset sequence. For example, in the key value array, the key values may be arranged in ascending or descending order. The following describes an example in which key values in a key value array are arranged in ascending order.

A key value in a key value array corresponding to each vertex and a group corresponding to the key value may be understood as a <key, value> pair (<key, value> pair, KVP). In other words, each vertex may have one or more <key, value> pairs.

S603: Generate row graph data.

The graph data includes row offsets, a key value vector, and a relationship value vector.

The relationship value vector includes key value arrays of the vertices in the graph. A j^{th} relationship value array in the relationship value vector is a relationship value array of a j^{th} vertex in the graph.

The row offsets indicate start locations of relationship value arrays of the vertices in the graph in the relationship value vector. The row offsets may also be referred to as row data. A j^{th} number of the row offsets indicates a start location of a key value array of the j^{th} vertex in the graph in the relationship value vector.

The relationship value vector includes groups corresponding to the key value arrays. A sequence of the groups in the relationship value vector is the same as that of the key value arrays. The relationship value vector may also be referred to as value data.

The key value vector may also be referred to as key data.

A data format of the graph data may be referred to as a format of bitmap with compressed sparse row (bitmap with compressed sparse row, BCSR).

A neighborhood matrix includes a plurality of rows, and each field indicates a neighbor vector of a vertex. In the method 600, the neighborhood matrix can be compacted. Especially when a proportion of "0" in the neighborhood matrix is high, compaction effect is good.

In a graph mining process, an intersection of neighbor sets of two vertices needs to be computed. The graph data generated according to the method 600 may be processed according to a data processing method shown in FIG. 6.

FIG. 6 is a schematic flowchart of a data processing method according to an embodiment of this application. The method 700 includes S701 and S702.

Before S701, graph data may be obtained.

The graph data indicates whether a relationship exists between vertices in a graph. The graph data includes row offsets, a key value vector, and a relationship value vector.

S701: Determine an equal key value of two vertices based on the graph data.

The two vertices may be determined based on a subgraph pattern.

Based on the graph data, <key, value> pairs of the vertices in the graph may be determined. In other words, key value arrays of the vertices and groups corresponding to key values in the key value arrays of the vertices are determined.

For the graph data of the graph 110, a key value array "0, 1, and 3" of a vertex 0 and a key value array "0, 1, 2, and 3" of a vertex 1 may be determined. For the vertex 0, the key value 0 corresponds to a group 01, the key value 1 corresponds to a group 01, and the key value 3 corresponds to a group 11. For the vertex 1, the key value 0 corresponds to a group 10, the key value 1 corresponds to a group 10, the key value 2 corresponds to a group 11, and the key value 3 corresponds to a group 10.

Therefore, for the vertex 0 and the vertex 1, equal key values include 0, 1, and 3.

S702: Determine a bit whose value is 1 in a computing result obtained in a preset computing manner and that is in groups corresponding to equal key values of the two vertices.

Different preset computing manners correspond to different relationships between the two vertices. For example, when the two vertices share a neighbor, that is, a relationship exists with both the two vertices, the preset computing manner is *a·b,* where a and b indicate values of the two vertices at a specific bit. When a relationship exists with a vertex A, and no relationship exists with a vertex B, the preset computing manner is *a*·*b̅,* where a indicates a value of a vertex A at a specific bit, and *b̅* indicates negation of a value of a vertex B at the specific bit. Therefore, a bit whose computing result is 1 may be understood as a bit whose relationships with the two vertices meets a preset condition. The following describes an example of determining a neighbor shared by the two vertices.

For the key value 0, the group corresponding to the vertex 0 is 01, and the group corresponding to the vertex 1 is 10. Bitwise comparison is performed on "01" and "10" to determine a bit whose bitwise AND operation result is 1.

For example, a bitwise AND operation may be performed on a group corresponding to each equal key value of the two vertices, and a bit whose computing result is 1 is a bit corresponding to a vertex having a relationship with both the two vertices.

A vertex set corresponding to an equal key value may be determined based on the equal key value. Then, a vertex in the graph corresponding to the bit may be determined based on a location of the bit whose computing result is 1 in the group to which the bit belongs.

For example, a group division manner of a neighborhood matrix may be further obtained. The vertex in the graph corresponding to the bit is determined based on the group division manner of the neighborhood matrix, a key value corresponding to the group including the bit whose computing result is 1, and the location of the bit whose computing result is 1 in the group to which the bit belongs.

For example, the groups corresponding to the key value 0, the groups corresponding to the key value 1, and the groups corresponding to the key value 3 are respectively compared for the vertex 0 and the vertex 1. It may be determined that the groups corresponding to the key value 0 and the groups corresponding to the key value 1 do not have a bit whose computing result is 1, and a bit whose computing result is 1 in the groups whose key values are 3 is a 0^{th} bit in the groups. The groups corresponding to the key value 3 in the neighborhood matrix include a vertex 6 and a vertex 7. A vertex corresponding to the 0^{th} bit is the vertex 6. Therefore, it may be determined that the neighbor shared by the vertex 0 and the vertex 1 is the vertex 6.

In the method 700, a neighbor shared by two vertices may be determined by determining an equal key value in key value arrays corresponding to the two vertices, and determining an equal bit in groups corresponding to each equal key value of the two vertices.

The equal key value in the key value arrays corresponding to the two vertices may be determined through set merging based on queuing shown in FIG. 3. The equal bit in the groups corresponding to each equal key value of the two vertices may be determined through bitwise comparison.

In a bitwise comparison process, values of a plurality of bits may be compared in parallel, and computing efficiency is higher.

Compared with comparison of the different column index parts corresponding to the two vertices in the data in the CSR format in FIG. 2, in the method 700, determining an equal key value in key value arrays corresponding to the two vertices can effectively reduce an amount of data that needs to be compared, and improve processing efficiency.

The foregoing describes the method embodiments in embodiments of this application with reference to FIG. 1 to FIG. 6. The following describes apparatus embodiments in embodiments of this application with reference to FIG. 7 and FIG. 10. It should be understood that the descriptions of the method embodiments correspond to the descriptions of the apparatus embodiments. Therefore, for parts not described in detail, refer to the foregoing method embodiments.

FIG. 7 is a schematic diagram of a structure of a data processing apparatus according to an embodiment of this application.

The data processing apparatus 800 includes a processing matrix (processing matrix, PM) 810, a filter array (filter array, FA) 820, and a compaction triangle (compaction triangle, CT) 830.

The processing matrix 810 includes v×v processing elements (processing elements, PEs), configured to process <key, value> pairs of the two vertices.

<Key, value> pairs of each vertex include a key value array of the vertex and groups corresponding to key values. v leftmost processing elements in the processing matrix 810 may receive a plurality of <key, value> pairs of a vertex A in the graph, and different processing elements are configured to receive different <key, value> pairs in the <key, value> pairs of the vertex A. v topmost processing elements in the processing matrix 810 may receive a plurality of <key, value> pairs of a vertex B in the graph, and different processing elements are configured to receive different <key, value> pairs in the <key, value> pairs of the vertex B. The vertex A and the vertex B are different vertices.

For the v leftmost processing elements from top to down, one clock cycle after a previous processing element receives a <key, value> pair, a next processing element receives a <key, value> pair. For the v topmost processing elements from left to right, one clock cycle after a previous processing element receives a <key, value> pair, a next processing element receives a <key, value> pair.

The processing element is configured to compare key values in received <key, value> pairs of the two vertices. It may also be understood that the processing element is configured to match the key values in the received <key, value> pairs of the two vertices. If the key values in the received <key, value> pairs of the two vertices are equal, it may be considered that the key values of the two vertices are successfully matched.

If the key values are equal, the processing element performs computing in a preset computing manner on groups in the <key, value> pairs of the two vertices, to determine a bit that is in the groups and that meets a relationship corresponding to the preset computing manner, and outputs the key values and a computing result.

If the key values are not equal, the processing element no longer performs computing and comparison in the preset computing manner on groups in the <key, value> pairs of the two vertices, and in a next clock cycle, transmits a <key, value> pair received from an adjacent processing element on a left side to an adjacent processing element on a right side, and transmits a key value received from an adjacent processing element on an upper side and a group corresponding to the key value to an adjacent processing element on a lower side.

As shown in (a) in FIG. 8, at a time point t0, a <key, value> pair A0 of a vertex A is input to a processing element PE 0 in a first row and a first column from the left side, and a <key, value> pair B0 of a vertex B is input to the PE 0 from the upper side.

The PE 0 compares a key value in the <key, value> pair A0 with a key value in the <key, value> pair B0. If the key value in the <key, value> pair A0 is equal to the key value in the <key, value> pair B0, the PE 0 performs computing in a preset computing manner on each bit in a group in the <key, value> pair A0 and a group in the <key, value> pair B0. The PE 0 no longer transmits the <key, value> pair A0 and the <key, value> pair B0. The processing matrix 810 may output the equal key value and a computing result.

If the key value in the <key, value> pair A0 is not equal to the key value in the <key, value> pair B0, the PE 0 may no longer perform computing in a preset computing manner on the group in the <key, value> pair A0 and the group in the <key, value> pair B0.

As shown in (B) in FIG. 8, at a time point 11, the PE 0 may transmit the <key, value> pair A0 to a PE 1 on the right side, that is, in the first row and a second column, and transmit the <key, value> pair B0 to a PE 2 on the lower side, that is, in a second row and the first column. In addition, at the time point 11, a <key, value> pair A1 of the vertex A is input to the processing element PE 2 in the second row and the first column from the left side, and a <key, value> pair B 1 of the vertex B is input to the PE 1 from the upper side.

Therefore, the PE 1 may compare the key value in the <key, value> pair A0 with a key value in the <key, value> pair B1. If the key value in the <key, value> pair A0 is equal to the key value in the <key, value> pair B1, the PE 1 performs computing in the preset computing manner on each bit in the group in the <key, value> pair A0 and a group in the <key, value> pair B1. The PE 1 no longer transmits the <key, value> pair A0 and the <key, value> pair B1. The processing matrix 810 may output the key value and a computing result.

If the key value in the <key, value> pair A0 is not equal to the key value in the <key, value> pair B1, the PE 1 may no longer determine an equal bit in the group in the <key, value> pair A0 and the group in the <key, value> pair B1, and at a time point t2, may transmit the <key, value> pair A0 to a right PE, and transmit the <key, value> pair B1 to a lower PE 3. If no other PE exists on the right side of the PE 1, the PE 1 may delete the <key, value> pair received from the left side, that is, delete the <key, value> pair A0.

The PE 2 may compare a key value in the <key, value> pair A1 with the key value in the <key, value> pair B0. If the key value in the <key, value> pair A1 is equal to the key value in the <key, value> pair B0, the PE 2 performs computing in the preset computing manner on each bit in a group in the <key, value> pair A1 and the group in the <key, value> pair B0. The PE 2 no longer transmits the <key, value> pair A1 and the <key, value> pair B0. The processing matrix 810 may output the equal key value and a computing result of each bit.

If the key value in the <key, value> pair A1 is not equal to the key value in the <key, value> pair B0, the PE 2 may no longer perform computing in the preset computing manner on the group in the <key, value> pair A1 and the group in the <key, value> pair B0, and at the time point t2, may transmit the <key, value> pair A1 to the right PE 3, and transmit the <key, value> pair B1 to a lower PE. If no other PE exists on the lower side of the PE 2, the PE 2 may delete the <key, value> pair received from the upper side, that is, delete the <key, value> pair B0.

If the key value in the <key, value> pair A0 is not equal to the key value in the <key, value> pair B1, and the key value in the <key, value> pair A1 is not equal to the key value in the <key, value> pair B0, the <key, value> pair A1 and the <key, value> pair B1 are transmitted to the PE 3 at the time point t2, so that the PE 3 may compare the key value in the <key, value> pair A1 and the key value in the <key, value> pair B1.

FIG. 9 is a schematic diagram of a structure of a processing element according to an embodiment of this application.

The processing element 1000 includes a comparison unit 1010 and a computing unit 1020.

The comparison unit 1010 is configured to compare a key value kt input from an upper side with a key value kl input from a left side. The comparison unit 1010 may be understood as a key-value comparator.

The computing unit 1020 is configured to: when the key value kt is equal to the key value kl, perform computing in a preset computing manner on each bit of a group vt input from the upper side and a group vl input from the left side.

When the key value kt is equal to the key value kl, output data of the processing element 1000 may include the key value kt and a result of computing each bit of the two groups input to the processing element 1000 from the upper side and the left side. The output data of the processing element 1000 may be transmitted to a processing element on a right side of the processing element 1000.

The comparison unit 1010 may further receive a validity indicator 1 input from the left side. The validity indicator 1 indicates whether a key value of a vertex A input to a row in which the processing element 1000 is located successfully matches a key value of a vertex B in a processing element on the left side of the processing element 1000.

When the validity indicator 1 received by the processing element 1000 indicates that the matching succeeds, the comparison unit 1010 and the computing unit 1020 in the processing element 1000 may no longer perform an operation. In this way, a computing amount can be reduced.

The processing element 1000 may further output a validity indicator 2. When the validity indicator 1 indicates that the matching succeeds, or the key value kt is equal to the key value kl, the validity indicator 2 output by the processing element 100 indicates that the matching succeeds in the row in which the processing element 1000 is located. The validity indicator 2 output by the processing element 1000 may be transmitted to the processing element on the right side of the processing element 1000. For example, if the validity indicator 1 and the validity indicator 2 are "1 ", it may indicate that the matching succeeds; otherwise, if the validity indicator 1 and the validity indicator 2 are "0", it may indicate that the matching fails.

In other words, when the validity indicator 1 indicates that the matching fails, the processing element 1000 may receive the key value kt and the group vt that are input from the upper side, and the key value kl and the group vl that are input from the left side. The comparison unit 1010 is configured to compare the key value kt with the key value kl.

When the key value kt is not equal to the key value kl, the validity indicator 2 output by the processing element 1000 indicates that the matching fails.

When the key value kt is equal to the key value kl, the computing unit 1020 is configured to separately perform computing in a preset computing manner on each bit of the group vt and the group vl. When the key value kt is equal to the key value kl, the validity indicator 2 output by the processing element 1000 indicates that the matching succeeds, and the processing element 1000 outputs the computing result of the successfully matched key values and groups.

When the validity indicator 1 indicates that the matching succeeds, the processing element 1000 may receive the computing result of the key values and the groups that is output by the processing element on the left side, output indication information 2 to indicate that the matching succeeds, and output the computing result of the key values and the groups.

A quantity of <key, value> pairs of vertex A and/or vertex B may exceed v. When a quantity of <key, value> pairs of each or more vertices in the vertex A and the vertex B may exceed v, the more than v <key, value> pairs may be divided into a plurality of <key, value> pair sets, and a quantity of <key, value> pairs in each <key, value> pair set does not exceed v.

Therefore, some <key, value> pair sets need to be input to a processing matrix 810 from a plurality of sides, and key values in a <key, value> pair set may need to be compared with key values in a plurality of other <key, value> pair sets exists, as shown in FIG. 10.

The processing matrix 810 may include 3×3 processing elements. Key values of the vertex A include 1, 4, 7, 8, 10, and the like, and key values of the vertex B include 1, 2, 3, 4, 5, 6, 7, 8, 9, and the like.

The plurality of <key, value> pairs of the vertex A and the plurality of <key, value> pairs of the vertex B are arranged in ascending order of key values, and the plurality of <key, value> pairs of the vertex A and the plurality of <key, value> pairs of the vertex B are divided in a manner in which each <key, value> pair set includes three <key, value> pairs. Key values in two key value sets of the vertex A are 1, 4, and 7, and 8 and 10, and key values in three key value sets of the vertex B are 1 to 3, 4 to 6, and 7 to 9.

First, the processing matrix 810 processes a key value set with smallest key values in the plurality of <key, value> pair sets of the vertex A, and a <key, value> pair set with smallest key value in the plurality of <key, value> pair sets of the vertex B. In other words, the <key, value> pair set of the vertex A including the key values 1, 4, and 7, and the <key, value> pair set of the vertex B including the key values 1 to 3 are input to the processing matrix 810 from the left side and the upper side, as shown in FIG. 10.

Then, largest key values in the two <key, value> pair sets input to the processing matrix 810 may be compared.

When the largest key values that respectively belong to the two <key, value> pair sets are not equal, a <key, value> pair set to which a larger key value in the two largest key values belongs is input to the processing matrix 810 again, and a next <key, value> pair set with smallest key values of the other vertex is input to the processing matrix 810.

As shown in FIG. 10, the key value 7 in the <key, value> pair set of the vertex A is greater than the key value 3 in the <key, value> pair set of the vertex B, and the <key, value> pair set of the vertex A including the key values 1, 4, and 7 and the <key, value> pair set of the vertex B including the key values 4 to 6 are respectively input to the processing matrix 810 from the left side and the upper side.

The <key, value> pair set of the vertex A including the key values 1, 4, and 7, and the <key, value> pair set of the vertex B including the key values 1 to 3 start to be input to the processing matrix 810 in a same clock cycle. The <key, value> pair set of the vertex A including the key values 1, 4, and 7, and the <key, value> pair set of the vertex B including the key values 4 to 6 also start to be input to the processing matrix 810 in a same clock cycle.

It should be understood that a time difference between time at which the <key, value> pair set of the vertex B including the key values 1 to 3 starts to be input to the processing matrix 810 and time at which the <key, value> pair set of the vertex B including the key values 4 to 6 starts to be input to the processing matrix 810 may be one or more clock cycles.

The filter array 820 may be configured to combine results of comparing key values in a <key, value> pair set with key values in a plurality of other <key, value> pair sets, to output an intermediate result corresponding to the <key, value> pair.

The filter array 820 includes v filter units (filter units, FUs). For example, each filter unit may correspond to one row in the processing matrix 810. When a <key, value> pair set is repeatedly input from the left side to the processing matrix 810, the filter array 820 is configured to combine key value comparison results of the <key, value> pair set and the plurality of other <key, value> pair sets.

In addition, the filter unit may be further configured to determine, based on computing results of bits of the group vt and the group vl, whether a vertex that meets a preset relationship exists. The vertex that meets the preset relationship is a vertex corresponding to a bit whose computing result is 1.

FIG. 11 is a schematic diagram of a structure of a filter unit according to an embodiment of this application.

The filter unit 1200 includes a logic processing element 1210, a validity indicator updating unit 1220, a validity indicator register 1230, and a result register 1240.

The logic processing element 1210 is configured to determine whether all computing results on groups output by the processing element 1000 in the row that corresponds to the filter unit 1200 and that is in the processing matrix 810 are "0".

When it is determined that all the computing results on groups are "0", the data in the row may be considered invalid. When all the computing results on groups are "0", the logic processing element 1210 may output "0"; otherwise, when not all the computing results on groups are "0", the logic processing element 1210 may output "1".

The validity indicator updating unit 1220 may receive an output of the logic processing element 1210, and a validity indicator 2 output by a last processing element 1000 in the row that corresponds to the filter unit 1200 and that is in the processing matrix 810.

When the validity indicator 2 output by the last processing element 1000 in the row that corresponds to the logic processing element 1210 and that is in the processing matrix 810 is "0" (indicating a failure in matching key values in the row of the processing element 1000 corresponding to the filter unit 1200), or when the logic processing element 1210 outputs "0", a result output by the validity indicator updating unit 1220 is "0", that is, it indicates that the output is invalid.

The validity indicator register 1230 is configured to store the result output by the validity indicator updating unit 1220.

The result register 1240 is configured to store the group computing results when an output of the logic processing element 1210 is "1".

The filter unit 1200 may further obtain a signal F and a signal L. The signal F and the signal L may be stored in the register. An initial value of the signal F is 1, and an initial value of the signal L is 0.

After the <key, value> pair set of the vertex A is input to the processing matrix 810 from the left side, and the <key, value> pair set of the vertex B is input to the processing matrix 810 from the upper side, a size relationship between a largest key value in the <key, value> pair set of the vertex A and a largest key value in the <key, value> pair set of the vertex B may be determined.

For example, an input cycle of the <key, value> pair set may be equal to v times a cycle of inputting each <key, value> pair in each <key, value> pair set to the processing matrix. When the largest key value corresponding to the vertex A is greater than the largest key value corresponding to the vertex B, the signal F is set to a value "0" in a next <key, value> pair set input cycle, and the signal L is immediately set to "0". Otherwise, the signal F is set to a value "1" in a next <key, value> pair set input cycle, and the signal L is immediately set to "1".

Alternatively, when the largest key value corresponding to the vertex A is greater than the largest key value corresponding to the vertex B, the signal F is set to the value "0" in a next <key, value> pair set input cycle, and the signal L is immediately set to "0". When the largest key value corresponding to the vertex A is equal to the largest key value corresponding to the vertex B, the signal F is set to the value "1" in a next <key, value> pair set input cycle, and the signal L is immediately set to "0". When the largest key value corresponding to the vertex A is less than the largest key value corresponding to the vertex B, the signal F is set to the value "1" in a next <key, value> pair set input cycle, and the signal L is immediately set to "1".

The <key, value> pair set of the vertex A input to the processing matrix 810 based on the signal F whose value is "0" is repeatedly input. The validity indicator updating unit 1220 may update a validity indicator 3 based on the output of the logic processing element 1210, the validity indicator 2 output by the last processing element 1000 in the row that corresponds to the filter unit 1200 and that is in the processing matrix 810, and the result stored in the validity indicator register 1230.

A new validity indicator result may be determined based on the output of the logic processing element 1210 and the validity indicator 2 output by the last processing element 1000 in the row that corresponds to the filter unit 1200 and that is in the processing matrix 810. When the output of the logic processing element 1210 and the validity indicator 2 output by the last processing element 1000 in the row that corresponds to the filter unit 1200 and that is in the processing matrix 810 are both "1", the new validity indicator result may be valid, that is, the validity indicator 3 indicates valid. Otherwise, when either of the output of the logic processing element 1210 and the validity indicator 2 output by the last processing element 1000 in the row that corresponds to the filter unit 1200 and that is in the processing matrix 810 is "0", the new validity indicator result may be invalid, that is, the validity indicator 3 indicates invalid.

The result stored in the validity indicator register 1230 may be understood as a history validity indicator result.

When either of the new validity indicator result and the history validity indicator result is valid, the result output by the validity indicator updating unit 1220 may be "1", indicating valid. In other words, an AND operation may be performed on the new validity indicator result and the history validity indicator result.

The validity indicator register 1230 is configured to store the result output by the validity indicator updating unit 1220, to update an output of the validity indicator register 1230 (that is, the validity indicator 3).

When the output of the logic processing element 1210 is "1", the filter unit 1200 writes the new group computing result into the result register 1240.

When the signal L is set to "1", the <key, value> pair set of the vertex A input to the processing matrix 810 is input to the processing matrix 810 for a last time. Therefore, when the signal L is set to "1", after the filter unit 1200 updates the group computing result stored in the result register 1240, the result register 1240 may output stored data.

For example, when the signal L is set to "1", if a result of the validity indicator result stored in the validity indicator register 1230 is "1", the result register 1240 outputs stored data. Otherwise, if the validity indicator result stored in the validity indicator register 1230 is "0", the result register 1240 may not output data.

Then, the result register 1240 and the validity indicator register 1230 can clear the stored data.

In a next <key, value> pair set input cycle, if the signal F is "1", a <key, value> pair set of the vertex A in this cycle is not repeatedly input to the processing matrix 810. The result register 1240 may be initialized when the signal F is "1".

In some embodiments, initialization may clear the data stored in the result register 1240.

In some other embodiments, the initialization may write a group in the <key, value> pair of the vertex A input in the row that corresponds to the filter unit 1200 and that is in the processing matrix into the result register 1240. Therefore, when the output of the logic processing element 1210 is "1", an AND operation may be performed on the new group computing result and the data in the result register 1240, to update the group computing result.

When the signal L is set to "1", the <key, value> pair set of the vertex A input to the processing matrix 810 further needs to be input to the processing matrix 810 again. The output of the filter unit 1200 is invalid.

The data processing apparatus 800 may further include a controller (not shown). The controller is configured to set the signal F and the signal L.

The compaction triangle 830 includes v×(v+1)/2 compaction unit (compaction unit, CU) forming a right triangle, and is configured to compact data output by the filter array 820.

In the compaction triangle 830, a quantity of compaction units in a first row is 1. Quantities of compaction units in rows from top to bottom gradually decrease. A difference between quantities of compaction units in two adjacent rows is 1.

As shown in FIG. 12, each row of the compaction triangle 830 corresponds to one filter unit in the filter matrix 820.

For each row of the compaction triangle 830, when a corresponding filter unit does not output valid data, each compaction unit in the row of the compaction triangle 830 receives data in a compaction unit above the compaction unit. When the corresponding filter unit outputs valid data, a leftmost compaction unit in the row in the compaction triangle 830 is configured to receive an equal key value of a vertex A and a vertex B that is output by the filter unit and a computing result of a group corresponding to the key value. Other compaction units receive data in upper left compaction units of the compaction units.

When the validity indicator 3 output by the filter unit is "1", it can be understood that the filter unit outputs valid data.

FIG. 13 is a schematic diagram of a structure of a compaction unit according to an embodiment of this application.

The compaction unit 1400 includes an interface 1401, an interface 1402, an interface 1403, and a register 1404.

The interface 1401 is configured to connect to a compaction unit above the compaction unit 1400. The interface 1402 is configured to connect to an upper left compaction unit of the compaction unit 1400. The interface 1403 is configured to receive a validity indicator 3 output by a filter unit corresponding to a row in which the compaction unit 1400 is located.

When the validity indicator 3 is "1", the interface 1401 stores data in the compaction unit above the compaction unit 1400 in the register 1404. When the validity indicator 3 is "0", the interface 1402 stores data in the upper left compaction unit of the compaction unit 1400 in the register 1404.

For example, a 1^{st} filter unit, a 3^{rd} filter unit, and a 4^{th} filter unit in the filter matrix 820 output valid data. The valid data output by the 1^{st} filter unit includes a key value 1 and a group computing result corresponding to the key value 1. The valid data output by the 3^{rd} filter unit includes a key value 3 and a group computing result corresponding to the key value 3. The valid data output by the 4^{th} filter unit includes a key value 9 and a group computing result corresponding to the key value 9.

A 1^{st} row, a 3^{rd} row, and a 4^{th} row in the compaction triangle 830 respectively correspond to the 1^{st} filter unit, the 3^{rd} filter unit, and the 4^{th} filter unit. Quantities of compaction units in the 1^{st} row, the 2^{nd} row, the 3^{rd} row, and the 4^{th} row in the compaction triangle 830 are respectively 1, 2, 3, and 4.

The 1^{st} filter unit outputs valid data. The compaction unit in the 1^{st} row in the compaction triangle 830 receives the valid data output by the 1^{st} filter unit.

No valid data is output by the 2^{nd} filter unit. Each compaction unit in a 2^{nd} row in the compaction triangle 830 obtains data from a compaction unit above the filter unit in the 1^{st} row in the compaction triangle 830. A 1^{st} compaction unit in the 2^{nd} row in the compaction triangle 830 obtains data in the compaction unit in the 1^{st} row. No compaction unit exists above the 1^{st} compaction unit in the 2^{nd} row, and no data is obtained.

The 3^{rd} filter unit outputs valid data. A 1^{st} compaction unit in the 3^{rd} row (that is, a leftmost compaction unit in the 3^{rd} row) in the compaction triangle 830 receives the valid data output by the 3^{rd} filter unit. Other compaction units in the 3^{rd} row in the compaction triangle 830 obtain data from an upper left compaction unit of the filter unit in the 2^{nd} row in the compaction triangle 830. In other words, a 2^{nd} compaction unit and a 3^{rd} compaction unit in the 3^{rd} row in the compaction triangle 830 respectively obtain data from the two compaction units in the 2^{nd} row.

The 4^{th} filter unit outputs valid data. A 1^{st} compaction unit in the 4^{th} row in the compaction triangle 830 receives the valid data output by the 4^{th} filter unit. Other compaction units in the 4^{th} row in the compaction triangle 830 obtain data from an upper left compaction unit of the filter unit in the 2^{nd} row in the compaction triangle 830. In other words, a 2^{nd} compaction unit to a 4^{th} compaction unit in the 4^{th} row in the compaction triangle 830 respectively obtain data from the three compaction units in the 3^{rd} row.

In this way, compaction units in the bottom row in the compaction triangle 830 can output the obtained data. Therefore, an output result is compacted data.

As shown in FIG. 14, in a processing matrix 810, for any row, v clock cycles (clock cycles, CCs) are needed from time when data is received (that is, <key, value> pairs of a vertex A and a vertex B are received) by a processing element in a 1^{st} column to time when data (the received data may be the <key, value> pairs of the vertex A and the vertex B, or may be the <key, value> pairs and a group computing result corresponding to the <key, value> pairs) is received by a processing element in a v^{th} column. However, v clock cycles are also needed from time when data is input to a processing element in the 1^{st} row and the 1^{st} column to time when data is input to a processing element in a v^{th} row and the 1^{st} column.

In the filter matrix 820, each filter unit filters data output in a row that corresponds to the filter unit and that is in the processing matrix 810 in one clock cycle.

In the compaction triangle 830, v clock cycles are needed from time when data is received in the 1^{st} row to time when data is output in a last row, and one clock cycle is need from time when data is received in the last row to time when data is output in the last row.

Therefore, the compaction triangle 830 may output data corresponding to the rows in a same clock cycle.

The data processing apparatus 800 may be implemented based on a dual inline memory module (dual inline memory module, DIMM), for example, may be disposed in a load reduced dual inline memory module (load reduced dual inline memory module, LRDIMM), to form a near memory computing architecture.

The data processing apparatus 800 may further include a counting unit. The counting unit is configured to count a subgraph that meets a requirement.

In other words, the counting unit may record a quantity of key values output by the compaction triangle 830. In addition, for different input data, the counting unit may perform cumulative counting.

The counting unit may include an adder and a register.

FIG. 15 is a schematic diagram of a structure of a data processing system according to an embodiment of this application.

The data processing system 1600 includes a controller 1610 and a processing matrix 1620.

The processing matrix 1620 includes v×v processing elements, and v is a positive integer greater than 1.

The controller 1610 is configured to: sequentially input at least one <key, value> pair of a first target vertex in two target vertices in a graph in a second direction to a plurality of processing elements at a first edge in the processing matrix 1620 based on input cycles, and sequentially input at least one <key, value> pair of a second target vertex in the two target vertices in a first direction to a plurality of processing elements at a second edge in the processing matrix 1620 based on the input cycles.

The input cycle may be a clock cycle or a positive integer multiple of a clock cycle.

The at least one <key, value> pair of the first target vertex and the at least one <key, value> pair of the second target vertex start to be input to the processing matrix in a same input cycle.

The first edge is adjacent to the second edge. The first direction is a direction away from the second edge. The second direction is a direction away from the first edge. The first edge and the second edge may be understood as two adjacent edges of the processing matrix 1620.

Each <key, value> pair of the target vertex includes a key value of the target vertex and a relationship value group of the target vertex corresponding to the key value. Different key values correspond to different vertex sets in the graph. The relationship value group of the target vertex corresponding to the key value of the target vertex indicates whether a relationship exists between the target vertex and vertices in a vertex set corresponding to the key value. A vertex having a relationship with the target vertex exists in the vertex set corresponding to the key value in each <key, value> pair of the target vertex.

Each of the plurality of processing elements is configured to determine whether the key value of the first target vertex input to the processing element is equal to the key value of the second target vertex input to the processing element.

Each processing element is further configured to: when the key value of the first target vertex is equal to the key value of the second target vertex, determine the query vertex in the graph based on the relationship value group of the first target vertex input to the processing element and the relationship value group of the second target vertex input to the processing element. Relationships between the query vertex and the two target vertices meet the preset condition.

Each processing element is further configured to: transmit the <key, value> pair of the first target vertex to a next processing element in the first direction, and transmit the <key, value> pair of the second target vertex to a next processing element in the second direction based on input cycles. The first direction is perpendicular to the first edge, and the second direction is perpendicular to the second edge.

The processing matrix 1620 may be understood as a systolic array architecture (systolic array architecture). In the systolic array architecture, data "flows" rhythmically between processing elements in the matrix in a predefined "pipelined" method. In a process in which the data flows, all processing elements process, in parallel, the data that flows through the processing elements, so that a very high parallel processing speed can be reached.

Optionally, each of the plurality of processing elements is specifically configured to: when the key value of the first target vertex is not equal to the key value of the second target vertex, transmit the <key, value> pair of the first target vertex to the next processing element in the first direction, and transmit the <key, value> pair of the second target vertex to the next processing element in the second direction.

Key values in <key, value> pairs of a target vertex are different. When the key value of the first target vertex is not equal to the key value of the second target vertex, the processing element transmits the key value of the first target vertex and the key value of the second target vertex. When the key value of the first target vertex is equal to the key value of the second target vertex, the <key, value> pairs are no longer transmitted. Therefore, the equal key value may not be compared with another key value, thereby reducing an operation amount.

Optionally, the controller 1610 is further configured to determine the at least one <key, value> pair of the first target vertex and the at least one <key, value> pair of the second target vertex based on graph data. The graph data includes a row offset vector, a key value vector, and a relationship value vector. The key value vector includes at least one key value of each vertex in a plurality of vertices in the graph. The row offset vector indicates a location of at least one key value of each vertex in the key value vector. The relationship value vector includes relationship value groups of vertices corresponding to key values of each vertex in the plurality of vertices. A ranking of at least one key value of each vertex in the key value vector is the same as a ranking of a relationship value group of a vertex corresponding to the key value of each vertex in the relationship value vector.

Optionally, quantities of vertices in vertex sets corresponding to different key values are equal.

Optionally, each of the plurality of processing elements is configured to: when the key value of the first target vertex is equal to the key value of the second target vertex, perform a preset operation on each bit of the relationship value group of the first target vertex and each bit of the relationship value group of the second target vertex that correspond to the equal key value. A same bit in relationship value groups that correspond to key values and that are of different vertices corresponds to a same vertex in vertex sets corresponding to the key values. A result of the preset operation on each bit indicates whether relationships between the vertex corresponding to the bit and the two target vertices meet the preset condition.

Optionally, a quantity of <key, value> pairs of the first target vertex is greater than v, and the controller 1610 is further configured to:
divide the at least one <key, value> pair of the first target vertex into a plurality of first <key, value> pair groups according to a sequence of key values in the <key, value> pairs, and divide the at least one <key, value> pair of the second target vertex into at least one second <key, value> pair group according to a sequence of key values in the <key, value> pairs. A quantity of <key, value> pairs in each of the plurality of first <key, value> pair groups and the at least one second <key, value> pair group is less than or equal to v. A<key, value> pair group having smallest key values in the plurality of first <key, value> pair groups is a third <key, value> pair group. A <key, value> pair group having smallest key values in the plurality of second <key, value> pair groups is a fourth <key, value> pair group.

The controller 1610 is further configured to perform a plurality of iterations, until a largest key value in the third <key, value> pair group is greater than a largest key value in the fourth <key, value> pair group.

Each iteration includes: sequentially inputting a plurality of <key, value> pairs in the third <key, value> pair group to a plurality of processing elements at the first edge in the plurality of processing elements based on the input cycles, and sequentially inputting a plurality of <key, value> pairs in the fourth <key, value> pair group to a plurality of processing elements at the first edge in the plurality of processing elements based on the input cycles; and when the largest key value in the third <key, value> pair group is less than the largest key value in the fourth <key, value> pair group, using a next first <key, value> pair group of the third <key, value> pair group in the plurality of first <key, value> pair groups arranged in ascending order of key values as another third <key, value> pair group.

The controller is specifically configured to: before the performing a plurality of iterations and after each iteration, sequentially inputting the plurality of <key, value> pairs in the third <key, value> pair group to the plurality of processing elements at the first edge in the processing matrix based on the input cycles, and sequentially inputting the plurality of <key, value> pairs in the fourth <key, value> pair group to the plurality of processing elements at the second edge in the processing matrix in the plurality of processing elements based on the input cycles.

When a quantity of <key, value> pairs of a target vertex is greater than a quantity of <key, value> pairs of an edge in the processing matrix, the <key, value> pairs of the target vertex may be grouped based on key values in the <key, value> pairs of the target vertex. Then, a <key, value> pair group with smallest key values may be selected in ascending order of key values and input to the processing matrix. When a largest key value in the <key, value> pair group of the target vertex input to the processing matrix is less than a largest key value in a <key, value> pair group of another target vertex input to the processing matrix, a next <key, value> pair group of the target vertex is input to the processing matrix, and is compared with the <key, value> pair group of the another target vertex input to the processing matrix again.

Therefore, when the quantity of <key, value> pairs of the target vertex is greater than the quantity of <key, value> pairs of an edge in the processing matrix, an operation amount is reduced.

For a specific structure of the processing matrix 1620 in the data processing system 1600, refer to descriptions in FIG. 7 to FIG. 9. The apparatus 1600 may further include the filter array 820 and the compaction triangle 830 shown in FIG. 7.

FIG. 16 is a schematic diagram of a structure of a data processing system according to an embodiment of this application.

The data processing system 1700 includes an apparatus 800 and a memory 1710. The memory is configured to store graph data and a processing result obtained by processing the graph data by the apparatus 800.

The apparatus 800 may be an ASIC. The memory 1710 may be understood as off-chip storage of the apparatus 800. For example, the memory 1710 may be an off-chip memory of the apparatus 800.

Therefore, the data processing system 1700 may be understood as a storage-compute decoupled computing system.

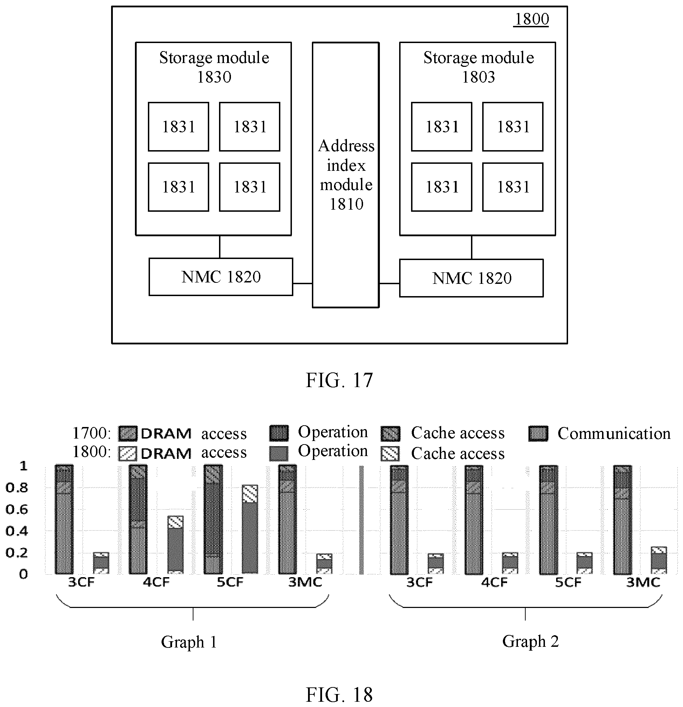

FIG. 17 is a schematic diagram of a structure of a data processing system according to an embodiment of this application.

The data processing system 1800 includes an address index module 1810, two units of storage (rank) level near memory computing (near memory computing, NMC) 1820, and a storage module 1830.

The storage module 1830 may include a plurality of dynamic random access memory (dynamic random access memory, DRAM) chips (chips) 1831.

When an 8-byte (x8) DRAM chip is used, there may be eight x8 DRAM chips in the storage module 1830, and a half rank provides data (32 bytes (bytes)) for one unit of NMC. In other words, 64-byte data of one rank is split into two pieces of 32-byte data, each of which provides data for one unit of NMC.

The address index module 1810 may be a registering clock driver (registering clock driver, RCD).

The storage module 1830 may include a KVP data area, a KVP address index area, and a result data area.

The KVP data area is used to store a KVP of each vertex in a graph. The KVP of each vertex in the graph may be determined based on graph data. The graph data includes a row offset vector, a key value vector, and a relationship value vector.

For example, the KVP of each vertex may be stored as 32 bits (bits). A key value may be located in a less significant bit of the 32 bits, and a relationship value group corresponding to the key value may be located in a more significant bit of the 32 bits. 32 bits indicates 4 bytes. One x8 DRAM chip can output <key, value> pairs of two vertices at the same time.

The KVP address index area is used to store row offsets (row data). The row offsets stored in the KVP address index area may be a row offset vector in the graph data. In other words, each number in the row offsets is stored in the KVP address index area in a form of an index address. Each vertex in the graph corresponds to one piece of offset information in the row offsets. An index address of the KVP of each vertex in the KVP data area may be determined based on offset information of the vertex.

The result data area is used to store an intermediate calculation result, a final calculation result, and the like of the NMC 1820. For example, the result data area may include a register 1230 and a result register 1240 that effectively indicate each filter unit 1200, a register 1404 for each compaction unit 1400, and the like.

When a query vertex that has a relationship with two target vertices in the graph needs to be determined, the address index module 1810 is configured to determine an index address of a KVP of the target vertex based on a sequence number of each target vertex in the row offsets.

The numbers in the row offsets may be stored continuously. Each number in the row offsets corresponds to a vertex in the graph. The address index module 1810 may determine an index address of a target vertex in a manner of a base address+a sequence number of the target vertex×an offset.

The index address may include a chip select (chip select, CS) signal and a command/address signal (command/address, C/A).

The NMC 1820 may determine, based on the index address, a location at which a KVP of the vertex is stored in the KVP data area. The NMC 1820 may perform the method 500 and the method 700. The NMC 1820 may include a data processing apparatus 800, or the NMC 1820 may be a data processing system 1600. The NMC 1820 may be referred to as DIMMining.

The data processing system 1800 may be an LRDIMM.

The data processing system 1800 is implemented without changing a conventional storage function of the LRDIMM or modifying an internal circuit of a dynamic random access memory (dynamic random access memory, DRAM) chip (chip).

Because different units of NMC of a plurality of ranks and a same rank are totally parallel and do not occupy any external bandwidth. Theoretically, effective bandwidth utilization of the data processing system 1800 may reach twice that of a quantity of ranks in one channel.

For example, the NMC 1820 includes a controller, a data forwarding unit, and a data processing apparatus 800.

The storage module 1830 may further include a data buffer (data buffer, DB), a cache (cache), and the like.

For example, a KVP of each vertex in the graph may be stored in the DRAM chip. In a computing process, the KVP of each vertex in the graph may be loaded to the DB.

Due to irregularity of the graph, data corresponding to some vertices is frequently accessed. Therefore, a frequently accessed KVP of a vertex may be stored in the cache. For example, when access frequency of a KVP of a vertex is higher than a first preset value, the KVP of the vertex may be stored in the cache; or when access frequency of a KVP of a vertex is lower than a second preset value, the KVP of the vertex may be deleted from the cache. The second preset value may be less than or equal to the first preset value. Access frequency of a KVP of a vertex may be determined based on a quantity of access times within a period of time. Duration of the period of time may be preset.

The data forwarding (data forwarding) unit is configured to obtain data in the DRAM chip, the DB, or the cache (cache), and input the data into a processing array 810 of the data processing apparatus 800.

According to the data processing system 1800 provided in this embodiment of this application, memory rank level parallel computing may be implemented by a DIMM-based near memory graph mining computing architecture. A plurality of DIMM ranks may be read and computed in parallel, to improve operation efficiency. In addition, compared with the data processing system 1700, the data processing system 1800 avoids frequent data transfer between a CPU and a memory, and the plurality of ranks do not need to contend for a right to use a memory bus. Therefore, the near memory computing architecture can significantly improve performance compared with the conventional CPU+memory storage-compute decoupled architecture.

FIG. 18 is a schematic diagram of performance comparison between data processing systems according to an embodiment of this application.

To respectively determine that subgraph patterns in a graph to be 3 clique finding (clique finding, CF), 4 clique finding (4 CF), 5 clique finding (5 CF), and 3 motif counting (motif counting, MF) subgraphs, the system 1700 and the system 1800 separately process <key, value> pairs of vertices in the graph. Total time needed for processing by the system 1700 is 1, and total time needed for processing by the system 1800 is shown in FIG. 18. A graph 1 and a graph 2 are different graph data.

It can be seen that, during running of the system 1700 and the system 1800, time needed for DRAM access, cache access, and an operation is almost the same. Compared with the system 1700, the system 1800 avoids frequent data transfer between a CPU and a memory, reduces communication time, and can significantly improve performance.

FIG. 20 is a schematic diagram of a structure of a data processing apparatus controlling apparatus according to an embodiment of this application.

The data processing apparatus controlling apparatus 2000 may include an obtaining module 2010 and a processing module 2020.

The obtaining module 2010 is configured to obtain a first target data group and a second target data group. The first target data group is a 1^{st} data group in a plurality of first data groups in a first data set. The second target data group is a 1^{st} data group in at least one second data group in a second data set. Each data group in each of the first data set and the second data set includes at least one piece of data. Each piece of data includes a key value. The data groups in each data set are arranged according to a first sequence or a second sequence. When the data groups in each data set are arranged according to the first sequence, key values in any data group in each data set are less than key values in a data group following the any data group. Alternatively, when the data groups in each data set are arranged according to the second sequence, key values in any data group in each data set are greater than key values in a data group following the any data group.

The processing module 2020 is configured to perform a plurality of iterations.

Each iteration includes: inputting the first target data group and the second target data group to the data processing apparatus. The data processing apparatus is configured to determine an equal key value in the first target data group and second target data.

Each iteration further includes: when the data groups in each data set are arranged according to the first sequence and a first key value is less than or equal to a second key value, or when the data groups in each data set are arranged according to the second sequence and a third key value is greater than or equal to a fourth key value, obtaining a first data group following the first target data group in the first data set as another first target data group. The first key value is a largest key value in the first target data group. The second key value is a largest key value in the second target data group. The third key value is a smallest key value in the first target data group. The fourth key value is a smallest key value in the second target data group.

Optionally, there are a plurality of second data groups.

When the data groups in each data set are arranged according to the first sequence and the first key value is greater than or equal to the second key value, or when the data groups in each data set are arranged according to the second sequence and the third key value is less than or equal to the fourth key value, a second data group following the second target data group in the second data set is obtained as another second target data group.

Optionally, the data processing apparatus includes a processing matrix. The processing matrix includes v×v processing elements, and v is a positive integer. A quantity of pieces of data in each of the first target data group and the second target data group is less than or equal to v.

The inputting the first target data group and the second target data group to the data processing apparatus includes: inputting the first target data group and the second target data group to the processing matrix according to an input rule. According to the input rule, at least one piece of data in the second target data group is sequentially input in a first direction to the processing elements at a second edge based on input cycles, and at least one piece of data in the first target data group is sequentially input in a second direction to the processing elements at a first edge based on the input cycles. The first target data group and the second data group start to be input in a same input cycle. The first edge is adjacent to the second edge. The first direction is a direction away from the second edge. The second direction is a direction away from the first edge.

Each processing element in the processing matrix is configured to: determine whether a key value in first data input to the processing element is equal to a key value in second data input to the processing element in a same input cycle. The first data is data belonging to the first target data group, and the second data is data belonging to the second target data group.

When v is greater than 1, each processing element in the processing matrix is further configured to: in a next input cycle after the first data and the second data are received, transmit the first data to a next processing element in the first direction, and transmit the second data to a next processing element in the second direction.

Optionally, key values in different data in each data set are different. Each processing element in the processing matrix is configured to: when the key value in the first data is not equal to the key value in the second data, transmit the first data to the next processing element in the first direction, and transmit the second data to the next processing element in the second direction.

Optionally, the data processing apparatus further includes a filter matrix. The filter matrix includes v filter units. The v filter units separately follow a last processing element in the second direction in each of v rows of the processing matrix in the first direction.

Each processing element in the processing matrix is further configured to: when the key value in the first data is equal to the key value in the second data, transmit a processing result of the processing element to a next unit in the second direction in the next input cycle after the first data and the second data are received, where the unit is a processing element or a filter unit, and the processing result includes the equal key value; or transmit the processing result to a next unit in the second direction in a next input cycle after the processing result is received.

The processing module 2020 is further configured to: when the first key value is greater than or equal to the second key value, control the v filter units in the first direction to sequentially output processing results corresponding to the second target data group based on input cycles.

Optionally, the data processing apparatus further includes a compaction triangle matrix. The compaction triangle matrix includes v rows of compaction units in the first direction, and quantities of compaction units increase row by row in the first direction.

Each of the plurality of compaction units is configured to: receive a processing result output by a filter unit preceding the compaction unit in the second direction, or receive a processing result output by a compaction unit in a previous row in the first direction.

Each of the plurality of compaction units is further configured to transmit the processing result to a compaction unit in a next row in the first direction in a next input cycle after the processing result is received.

Optionally, different key values correspond to different vertex sets in a graph. The first data indicates whether a first target vertex in the graph has a relationship with at least one vertex in a vertex set corresponding to a key value in the first data. The second data indicates whether a second target vertex in the graph has a relationship with at least one vertex in a vertex set corresponding to a key value in the second data.

Each processing matrix is further configured to output a processing result when the key value in the first data is equal to the key value in the second data. The processing result indicates a query vertex in the graph. Relationships between the query vertex and the two target vertices meet a preset condition.

Optionally, the first data further includes a first relationship value group of the first target vertex corresponding to the key value. The second data further includes a second relationship value group of the second target vertex corresponding to the key value.

Each processing element in the processing matrix is further configured to: when the key value in the first data is equal to the key value in the second data, perform a preset operation on each bit in the first relationship value group and the second relationship value group. A same bit in the first relationship value group and in the second relationship value group corresponding to the equal key value corresponds to a same vertex in the vertex sets corresponding to the equal key value. A result of the preset operation on each bit indicates whether relationships between the vertex corresponding to the bit and the two target vertices meet the preset condition.

Optionally, when the data groups in each data set are arranged according to the first sequence, key values in each first data group are arranged in ascending order. Alternatively, when the data groups in each data set are arranged according to the second sequence, key values in each first data group are arranged in descending order.

In some other embodiments, the apparatus 2000 may alternatively be a data processing apparatus.

The obtaining module 2010 is configured to obtain at least one <key, value> pair of a first target vertex and at least one <key, value> pair of a second target vertex in two target vertices in a graph. Each <key, value> pair of the target vertex includes a key value of the target vertex and a relationship value group of the target vertex corresponding to the key value. Different key values correspond to different vertex sets in the graph. The relationship value group of the target vertex corresponding to the key value of the target vertex indicates whether a relationship exists between the target vertex and vertices in a vertex set corresponding to the key value. A vertex having a relationship with the target vertex exists in the vertex set corresponding to the key value in each <key, value> pair of the target vertex.

The processing module 2020 is configured to determine an equal key value in the at least one key value of the first target vertex and the at least one key value of the second target vertex.

The processing module 2020 is further configured to determine a query vertex in the graph based on the relationship value group of the first target vertex and the relationship value group of the second target vertex that correspond to the equal key value, where relationships between the query vertex and the two target vertices meet a preset condition.

Optionally, the obtaining module 2010 is configured to: obtain data of the graph, where the data of the graph includes a row offset vector, a key value vector, and a relationship value vector; and determine the at least one <key, value> pair of each of the two target vertices based on the graph data. The key value vector includes at least one key value of each vertex in a plurality of vertices in the graph. The row offset vector indicates a location of at least one key value of each vertex in the key value vector. The relationship value vector includes relationship value groups of vertices corresponding to key values of each vertex in the plurality of vertices. A ranking of at least one key value of each vertex in the key value vector is the same as a ranking of a relationship value group of a vertex corresponding to the key value of each vertex in the relationship value vector.

Optionally, quantities of vertices in vertex sets corresponding to different key values are equal.

Optionally, the processing module 2020 is specifically configured to perform a preset operation on each bit of the relationship value group of the first target vertex and each bit of the relationship value group of the second target vertex that correspond to the equal key value. A same bit in relationship value groups that correspond to key values and that are of different vertices corresponds to a same vertex in vertex sets corresponding to the key value. A result of the preset operation on each bit indicates whether relationships between the vertex corresponding to the bit and the two target vertices meet the preset condition.

Optionally, the processing module 2020 includes a controller and a processing matrix.

The controller is configured to: sequentially input at least one <key, value> pair of the first target vertex in the second direction to a plurality of processing elements at the first edge in the processing matrix based on the input cycles, and sequentially input at least one <key, value> pair of the second target vertex in the first direction to a plurality of processing elements at the second edge in the processing matrix based on the input cycles, to determine the equal key value.

The processing matrix includes v×v processing elements, and v is an integer greater than 1. The at least one <key, value> pair of the first target vertex and the at least one <key, value> pair of the second target vertex start to be input to the processing matrix in a same input cycle. The first edge is adjacent to the second edge. The first direction is a direction away from the second edge. The second direction is a direction away from the first edge. Each processing element is configured to determine whether the key value of the first target vertex input to the processing element is equal to the key value of the second target vertex input to the processing element.

Each of the plurality of processing elements is configured to: when the key value of the first target vertex is equal to the key value of the second target vertex, determine the query vertex in the graph based on the relationship value group of the first target vertex input to the processing element and the relationship value group of the second target vertex input to the processing element. Relationships between the query vertex and the two target vertices meet the preset condition.

Each of the plurality of processing elements is further configured to: transmit the <key, value> pair of the first target vertex to a next processing element in the first direction, and transmit the <key, value> pair of the second target vertex to a next processing element in the second direction based on input cycles.

Optionally, each of the plurality of processing elements is specifically configured to: when the key value of the first target vertex is not equal to the key value of the second target vertex, transmit the <key, value> pair of the first target vertex to the next processing element in the first direction, and transmit the <key, value> pair of the second target vertex to the next processing element in the second direction.

Optionally, a quantity of <key, value> pairs of the first target vertex is greater than v. The controller is further configured to: divide the at least one <key, value> pair of the first target vertex into a plurality of first <key, value> pair groups according to a sequence of key values in the <key, value> pairs, and divide the at least one <key, value> pair of the second target vertex into at least one second <key, value> pair group according to a sequence of key values in the <key, value> pairs. A quantity of <key, value> pairs in each of the plurality of first <key, value> pair groups and the at least one second <key, value> pair group is less than or equal to v. A <key, value> pair group having smallest key values in the plurality of first <key, value> pair groups is a third <key, value> pair group. A <key, value> pair group having smallest key values in the plurality of second <key, value> pair groups is a fourth <key, value> pair group.

The controller is further configured to perform a plurality of iterations, until a largest key value in the third <key, value> pair group is greater than a largest key value in the fourth <key, value> pair group.

The iteration includes: sequentially inputting at least one <key, value> pairs in the third <key, value> pair group to a plurality of processing elements at the first edge in the plurality of processing elements based on the input cycles, and sequentially inputting at least one <key, value> pairs in the fourth <key, value> pair group to a plurality of processing elements at the second edge in the plurality of processing elements based on the input cycles; and when the largest key value in the third <key, value> pair group is less than the largest key value in the fourth <key, value> pair group, using a next first <key, value> pair group of the third <key, value> pair group in the plurality of first <key, value> pair groups arranged in ascending order of key values as another third <key, value> pair group.

The controller is further configured to: before the performing a plurality of iterations and after each iteration, sequentially inputting the plurality of <key, value> pairs in the third <key, value> pair group to the plurality of processing elements at the first edge in the processing matrix based on the input cycles, and sequentially inputting the plurality of <key, value> pairs in the fourth <key, value> pair group to the plurality of processing elements at the second edge in the processing matrix in the plurality of processing elements based on the input cycles.

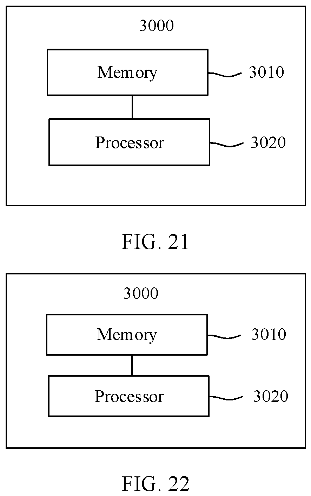

FIG. 21 is a schematic diagram of a structure of a data processing apparatus controlling apparatus according to an embodiment of this application.

The control apparatus 3000 includes a memory 3010 and at least one processor 3020.

The memory 3010 is configured to store program instructions. The processor 3020 is configured to execute the program instructions, to implement steps, methods, operations, or functions performed by the data processing apparatus.

For example, the processor 3020 is configured to obtain a first target data group and a second target data group. The first target data group is a 1^{st} data group according to a first sequence in a plurality of first data groups in a first data set. The second target data group is a 1^{st} data group in at least one second data group in a second data set. Each data group in each of the first data set and the second data set includes at least one piece of data. Each piece of data includes a key value. The data groups in each data set are arranged according to a first sequence or a second sequence. When the data groups in each data set are arranged according to the first sequence, key values in any data group in each data set are less than key values in a data group following the any data group. Alternatively, when the data groups in each data set are arranged according to the second sequence, key values in any data group in each data set are greater than key values in a data group following the any data group.

The processor 3020 is further configured to perform a plurality of iterations.

Each iteration includes: inputting the first target data group and the second target data group to the data processing apparatus. The data processing apparatus is configured to determine an equal key value in the first target data group and second target data.

Each iteration further includes: when the data groups in each data set are arranged according to the first sequence and a first key value is less than or equal to a second key value, or when the data groups in each data set are arranged according to the second sequence and a third key value is greater than or equal to a fourth key value, obtaining a first data group following the first target data group in the first data set as another first target data group. The first key value is a largest key value in the first target data group. The second key value is a largest key value in the second target data group. The third key value is a smallest key value in the first target data group. The fourth key value is a smallest key value in the second target data group.

Optionally, there are a plurality of second data groups.

When the data groups in each data set are arranged according to the first sequence and the first key value is greater than or equal to the second key value, or when the data groups in each data set are arranged according to the second sequence and the third key value is less than or equal to the fourth key value, a second data group following the second target data group in the second data set is obtained as another second target data group.

Optionally, the data processing apparatus includes a processing matrix. The processing matrix includes v×v processing elements, and v is a positive integer. A quantity of pieces of data in each of the first target data group and the second target data group is less than or equal to v.

The inputting the first target data group and the second target data group to the data processing apparatus includes: inputting the first target data group and the second target data group to the processing matrix according to an input rule. According to the input rule, at least one piece of data in the second target data group is sequentially input in a first direction to the processing elements at a second edge based on input cycles, and at least one piece of data in the first target data group is sequentially input in a second direction to the processing elements at a first edge based on the input cycles. The first target data group and the second data group start to be input in a same input cycle. The first edge is adjacent to the second edge. The first direction is a direction away from the second edge. The second direction is a direction away from the first edge.

Each processing element in the processing matrix is configured to: determine whether a key value in first data input to the processing element is equal to a key value in second data input to the processing element in a same input cycle. The first data is data belonging to the first target data group, and the second data is data belonging to the second target data group.

When v is greater than 1, each processing element in the processing matrix is further configured to: in a next input cycle after the first data and the second data are received, transmit the first data to a next processing element in the first direction, and transmit the second data to a next processing element in the second direction.

Optionally, key values in different data in each data set are different. Each processing element in the processing matrix is configured to: when the key value in the first data is not equal to the key value in the second data, transmit the first data to the next processing element in the first direction, and transmit the second data to the next processing element in the second direction.

Optionally, the data processing apparatus further includes a filter matrix. The filter matrix includes v filter units. The v filter units separately follow a last processing element in the second direction in each of v rows of the processing matrix in the first direction.

Each processing element in the processing matrix is further configured to: when the key value in the first data is equal to the key value in the second data, transmit a processing result of the processing element to a next unit in the second direction in the next input cycle after the first data and the second data are received, where the unit is a processing element or a filter unit, and the processing result includes the equal key value; or transmit the processing result to a next unit in the second direction in a next input cycle after the processing result is received.

The processor 3020 is further configured to: when the first key value is greater than or equal to the second key value, control the v filter units in the first direction to sequentially output processing results corresponding to the second target data group based on input cycles.

Optionally, the data processing apparatus further includes a compaction triangle matrix. The compaction triangle matrix includes v rows of compaction units in the first direction, and quantities of compaction units increase row by row in the first direction.

Each of the plurality of compaction units is configured to: receive a processing result output by a filter unit preceding the compaction unit in the second direction, or receive a processing result output by a compaction unit in a previous row in the first direction.

Each of the plurality of compaction units is configured to transmit the processing result to a compaction unit in a next row in the first direction in a next input cycle after the processing result is received.

Optionally, different key values correspond to different vertex sets in a graph. The first data indicates whether a first target vertex in the graph has a relationship with at least one vertex in a vertex set corresponding to a key value in the first data. The second data indicates whether a second target vertex in the graph has a relationship with at least one vertex in a vertex set corresponding to a key value in the second data.

Each processing matrix is further configured to output a processing result when the key value in the first data is equal to the key value in the second data. The processing result indicates a query vertex in the graph. Relationships between the query vertex and the two target vertices meet a preset condition.

Optionally, the first data further includes a first relationship value group of the first target vertex corresponding to the key value. The second data further includes a second relationship value group of the second target vertex corresponding to the key value.

Each processing element in the processing matrix is further configured to: when the key value in the first data is equal to the key value in the second data, perform a preset operation on each bit in the first relationship value group and the second relationship value group. A same bit in the first relationship value group and in the second relationship value group corresponding to the equal key value corresponds to a same vertex in the vertex sets corresponding to the equal key value. A result of the preset operation on each bit indicates whether relationships between the vertex corresponding to the bit and the two target vertices meet the preset condition.

Optionally, when the data groups in each data set are arranged according to the first sequence, key values in each first data group are arranged in ascending order. Alternatively, when the data groups in each data set are arranged according to the second sequence, key values in each first data group are arranged in descending order.

Specifically, in addition, all or some of the units of the apparatus may be integrated, or may be implemented independently. In an implementation, the units may be integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, and a CPU and a graphics processing unit (graphics processing unit, GPU).

According to an embodiment of this application, a computer program storage medium is further provided. The computer program storage medium has program instructions, and when the program instructions are executed, the foregoing method is performed.

According to an embodiment of this application, a chip system is further provided. The chip system includes at least one processor, and when program instructions are executed by the at least one processor, the foregoing method is performed.

According to an embodiment of this application, a program product is further provided. The computer program product includes program instructions. When the program instructions are executed in a computer device, the foregoing data processing method is performed.

According to an embodiment of this application, a data processing system is further provided, including the data processing apparatus and the data processing apparatus controlling apparatus described above.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. At least one of the following items (pieces) or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

The prefix words "first", "second", and the like in embodiments of this application are merely intended to distinguish between different objects, and impose no limitation on locations, sequences, priorities, quantities, content, or the like of the described objects. For example, if the described object is a "key value", ordinal numbers before the "key value" in a "first key value" and a "second key value" impose no limitation on a location, a sequence, or a priority between "interfaces". For another example, if the described object is a "direction", ordinal numbers before the "direction" in a "first direction" and a "second direction" impose no limitation on a location, a sequence, or a priority between "directions".

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing apparatus controlling method, wherein the method comprises:
obtaining a first target data group and a second target data group, wherein the first target data group is a 1^{st} data group in a plurality of first data groups in a first data set, the second target data group is a 1^{st} data group in at least one second data group in a second data set, each data group in each of the first data set and the second data set comprises at least one piece of data, each piece of data comprises a key value, the data groups in each data set are arranged according to a first sequence or a second sequence, and when the data groups in each data set are arranged according to the first sequence, key values in any data group in each data set are less than key values in a data group following the any data group, or when the data groups in each data set are arranged according to the second sequence, key values in any data group in each data set are greater than key values in a data group following the any data group; and
performing a plurality of iterations, wherein each iteration comprises:
inputting the first target data group and the second target data group to a data processing apparatus, wherein the data processing apparatus is configured to determine an equal key value in the first target data group and second target data; and
when the data groups in each data set are arranged according to the first sequence and a first key value is less than or equal to a second key value, or when the data groups in each data set are arranged according to the second sequence and a third key value is greater than or equal to a fourth key value, obtaining a first data group following the first target data group in the first data set as another first target data group, wherein the first key value is a largest key value in the first target data group, the second key value is a largest key value in the second target data group, the third key value is a smallest key value in the first target data group, and the fourth key value is a smallest key value in the second target data group.

2. The method according to claim 1, wherein there are a plurality of second data groups; and
when the data groups in each data set are arranged according to the first sequence and the first key value is greater than or equal to the second key value, or when the data groups in each data set are arranged according to the second sequence and the third key value is less than or equal to the fourth key value, a second data group following the second target data group in the second data set is obtained as another second target data group.

3. The method according to claim 1 or 2, wherein the data processing apparatus comprises a processing matrix, the processing matrix comprises v×v processing elements, v is a positive integer, and a quantity of pieces of data in each of the first target data group and the second target data group is less than or equal to v;
an i^{th} piece of first data in the first target data group is input in a second direction to a j^{th} processing element in v processing elements at a first edge in a j^{th} input cycle of the iterations, a p^{th} piece of second data in the second target data is input in a first direction to a q^{th} processing element in v processing elements at a second edge in a q^{th} input cycle of the iterations, the first edge is adjacent to the second edge, different data in each target data group is input to different processing elements, the first direction is a direction from the second edge to the inside of the processing matrix and perpendicular to the second edge, the second direction is a direction from the first edge to the inside of the processing matrix and perpendicular to the first edge, and i, j, p, and q are all positive integers;
each processing element in the processing matrix is configured to: determine whether a key value in first data input to the processing element is equal to a key value in second data input to the processing element in a same input cycle; and
when v is greater than 1, each processing element in the processing matrix is further configured to: in a next input cycle after the first data and the second data are received, transmit the first data to a next processing element in the first direction, and transmit the second data to a next processing element in the second direction.

4. The method according to claim 3, wherein key values in different data in each data set are different, and each processing element in the processing matrix is configured to: when the key value in the first data is not equal to the key value in the second data, transmit the first data to the next processing element in the first direction, and transmit the second data to the next processing element in the second direction.

5. The method according to claim 3 or 4, wherein the data processing apparatus further comprises a filter matrix, the filter matrix comprises v filter units, and the v filter units separately follow a last processing element in the second direction in each of v rows of the processing matrix in the first direction;
each processing element in the processing matrix is further configured to:
when the key value in the first data is equal to the key value in the second data, transmit a processing result of the processing element to a next unit in the second direction in the next input cycle after the first data and the second data are received, wherein the unit is a processing element or a filter unit, and the processing result comprises the equal key value; or
transmit the processing result to a next unit in the second direction in a next input cycle after the processing result is received; and
the method further comprises: when the first key value is greater than or equal to the second key value, controlling the v filter units in the first direction to sequentially output processing results corresponding to the second target data group based on input cycles.

6. The method according to claim 5, wherein the data processing apparatus further comprises a compaction triangle matrix, the compaction triangle matrix comprises v rows of compaction units in the first direction, and quantities of compaction units increase row by row in the first direction; and
each of the plurality of compaction units is configured to:
receive a processing result output by a filter unit preceding the compaction unit in the second direction, or receive a processing result output by a compaction unit in a previous row in the first direction; and
transmit the processing result to a compaction unit in a next row in the first direction in a next input cycle after the processing result is received.

7. The method according to any one of claims 3 to 6, wherein different key values correspond to different vertex sets in a graph, the first data indicates whether a first target vertex in the graph has a relationship with at least one vertex in a vertex set corresponding to a key value in the first data, and the second data indicates whether a second target vertex in the graph has a relationship with at least one vertex in a vertex set corresponding to a key value in the second data; and
each processing matrix is further configured to output a processing result when the key value in the first data is equal to the key value in the second data, wherein the processing result indicates a query vertex in the graph, and relationships between the query vertex and the two target vertices meet a preset condition.

8. The method according to any one of claims 3 to 7, wherein the first data further comprises a first relationship value group of the first target vertex corresponding to the key value, and the second data further comprises a second relationship value group of the second target vertex corresponding to the key value; and
each processing element in the processing matrix is further configured to: when the key value in the first data is equal to the key value in the second data, perform a preset operation on each bit in the first relationship value group and the second relationship value group, wherein a same bit in the first relationship value group and in the second relationship value group corresponding to the equal key value corresponds to a same vertex in the vertex sets corresponding to the equal key value, and a result of the preset operation on each bit indicates whether relationships between the vertex corresponding to the bit and the two target vertices meet the preset condition.

9. The method according to any one of claims 1 to 8, wherein when the data groups in each data set are arranged according to the first sequence, key values in each first data group are arranged in ascending order; or when the data groups in each data set are arranged according to the second sequence, key values in each first data group are arranged in descending order.

10. A data processing apparatus controlling apparatus, comprising an obtaining module and a processing module, wherein
the obtaining module is configured to obtain a first target data group and a second target data group, wherein the first target data group is a 1^{st} data group in a plurality of first data groups in a first data set, the second target data group is a 1^{st} data group in at least one second data group in a second data set, each data group in each of the first data set and the second data set comprises at least one piece of data, each piece of data comprises a key value, the data groups in each data set are arranged according to a first sequence or a second sequence, and when the data groups in each data set are arranged according to the first sequence, key values in any data group in each data set are less than key values in a data group following the any data group, or when the data groups in each data set are arranged according to the second sequence, key values in any data group in each data set are greater than key values in a data group following the any data group; and
the processing module is configured to perform a plurality of iterations, wherein each iteration comprises:
inputting the first target data group and the second target data group to a data processing apparatus, wherein the data processing apparatus is configured to determine an equal key value in the first target data group and second target data; and
when the data groups in each data set are arranged according to the first sequence and a first key value is less than or equal to a second key value, or when the data groups in each data set are arranged according to the second sequence and a third key value is greater than or equal to a fourth key value, obtaining a first data group following the first target data group in the first data set as another first target data group, wherein the first key value is a largest key value in the first target data group, the second key value is a largest key value in the second target data group, the third key value is a smallest key value in the first target data group, and the fourth key value is a smallest key value in the second target data group.

11. The apparatus according to claim 10, wherein there are a plurality of second data groups; and
when the data groups in each data set are arranged according to the first sequence and the first key value is greater than or equal to the second key value, or when the data groups in each data set are arranged according to the second sequence and the third key value is less than or equal to the fourth key value, a second data group following the second target data group in the second data set is obtained as another second target data group.

12. The apparatus according to claim 10 or 11, wherein the data processing apparatus comprises a processing matrix, the processing matrix comprises v×v processing elements, v is a positive integer, and a quantity of pieces of data in each of the first target data group and the second target data group is less than or equal to v;
an i^{th} piece of first data in the first target data group is input in a second direction to a j^{th} processing element in v processing elements at a first edge in a j^{th} input cycle of the iterations, a p^{th} piece of second data in the second target data is input in a first direction to a q^{th} processing element in v processing elements at a second edge in a q^{th} input cycle of the iterations, the first edge is adjacent to the second edge, different data in each target data group is input to different processing elements, the first direction is a direction from the second edge to the inside of the processing matrix and perpendicular to the second edge, the second direction is a direction from the first edge to the inside of the processing matrix and perpendicular to the first edge, and i, j, p, and q are all positive integers;
each processing element in the processing matrix is configured to: determine whether a key value in first data input to the processing element is equal to a key value in second data input to the processing element in a same input cycle; and
when v is greater than 1, each processing element in the processing matrix is further configured to: in a next input cycle after the first data and the second data are received, transmit the first data to a next processing element in the first direction, and transmit the second data to a next processing element in the second direction.

13. The apparatus according to claim 12, wherein key values in different data in each data set are different, and each processing element in the processing matrix is configured to: when the key value in the first data is not equal to the key value in the second data, transmit the first data to the next processing element in the first direction, and transmit the second data to the next processing element in the second direction.

14. The apparatus according to claim 12 or 13, wherein the data processing apparatus further comprises a filter matrix, the filter matrix comprises v filter units, and the v filter units separately follow a last processing element in the second direction in each of v rows of the processing matrix in the first direction;
each processing element in the processing matrix is further configured to: when the key value in the first data is equal to the key value in the second data, transmit a processing result of the processing element to a next unit in the second direction in the next input cycle after the first data and the second data are received, wherein the unit is a processing element or a filter unit, and the processing result comprises the equal key value; or transmit the processing result to a next unit in the second direction in a next input cycle after the processing result is received; and
the processing module is further configured to: when the first key value is greater than or equal to the second key value, control the v filter units in the first direction to sequentially output processing results corresponding to the second target data group based on input cycles.

15. The apparatus according to claim 14, wherein the data processing apparatus further comprises a compaction triangle matrix, the compaction triangle matrix comprises v rows of compaction units in the first direction, and quantities of compaction units increase row by row in the first direction; and
each of the plurality of compaction units is configured to:
receive a processing result output by a filter unit preceding the compaction unit in the second direction, or receive a processing result output by a compaction unit in a previous row in the first direction; and
transmit the processing result to a compaction unit in a next row in the first direction in a next input cycle after the processing result is received.

16. The apparatus according to any one of claims 12 to 15, wherein different key values correspond to different vertex sets in a graph, the first data indicates whether a first target vertex in the graph has a relationship with at least one vertex in a vertex set corresponding to a key value in the first data, and the second data indicates whether a second target vertex in the graph has a relationship with at least one vertex in a vertex set corresponding to a key value in the second data; and
each processing matrix is further configured to output a processing result when the key value in the first data is equal to the key value in the second data, wherein the processing result indicates a query vertex in the graph, and relationships between the query vertex and the two target vertices meet a preset condition.

17. The apparatus according to any one of claims 12 to 16, wherein the first data further comprises a first relationship value group of the first target vertex corresponding to the key value, and the second data further comprises a second relationship value group of the second target vertex corresponding to the key value; and
each processing element in the processing matrix is further configured to: when the key value in the first data is equal to the key value in the second data, perform a preset operation on each bit in the first relationship value group and the second relationship value group, wherein a same bit in the first relationship value group and in the second relationship value group corresponding to the equal key value corresponds to a same vertex in the vertex sets corresponding to the equal key value, and a result of the preset operation on each bit indicates whether relationships between the vertex corresponding to the bit and the two target vertices meet the preset condition.

18. The apparatus according to any one of claims 10 to 17, wherein when the data groups in each data set are arranged according to the first sequence, key values in each first data group are arranged in ascending order; or when the data groups in each data set are arranged according to the second sequence, key values in each first data group are arranged in descending order.

19. A data processing apparatus controlling apparatus, comprising a memory and at least one processor, wherein the memory is configured to store a program, and when the program is executed in the at least one processor, the processor is configured to perform the method according to any one of claims 1 to 9.

20. A computer program product, comprising program instructions, wherein when the program instructions are executed, the method according to any one of claims 1 to 9 is performed.

21. A computer-readable storage medium, wherein the computer-readable medium stores program code to be executed by a device, and when the program instructions are executed, the method according to any one of claims 1 to 9 is performed.

22. A chip, wherein the chip comprises at least one processor, and when program instructions are executed by the at least one processor, the method according to any one of claims 1 to 9 is performed.

23. A data processing system, comprising the data processing apparatus controlling apparatus according to any one of claims 10 to 19 and the data processing apparatus.
